# EUROPÄISCHE PATENTSCHRIFT

(11) **EP 0 555 751 B1**
(45) Veröffentlichungstag und Bekanntmachung des Hinweises auf die Patenterteilung: **09.04.1997**
(21) Anmeldenummer: 93101641.4
(22) Anmeldetag: 03.02.1993
(51) Int. Cl.: H02G 7/12

(54) **Selbstdämpfender Feldabstandhalter für Bündelleiter**
Damping spacer for bundle conductors
Entretoise amortisseuse pour conducteurs en faisceau

(30) Priorität: 13.02.1992 DE 9201795 U; 12.06.1992 DE 9207918 U
(43) Veröffentlichungstag der Anmeldung: 18.08.1993
(73) Patentinhaber: RICHARD BERGNER GMBH & CO, 91124 Schwabach (DE)
(72) Erfinder: Faber, Dietmar, W-8835 Pleinfeld (DE); Katheder, Hans, W-8541 Kammerstein (DE); Nuhn, Klaus, W-8540 Schwabach (DE)
(74) Vertreter: Tergau, Enno, Dipl.-Ing.

(56) Entgegenhaltungen:
- DE-U- 1 988 260
- FR-A- 1 602 717
- US-A- 3 971 881
- Feldabstandhalter, Fa. Karl Pfisterer, Stuttart, Prospekt Nr. 1269

## Beschreibung

Die Erfindung betrifft einen selbstdämpfenden Feldabstandhalter für Bündelleiter mit den Merkmalen des Oberbegriffs des Anspruches 1.

Bei Freileitungsnetzen zur Übertragung von elektrischer Energie sind die Teilleiter eines Bündelleiters parallel zueinander angeordnet. Feldabstandhalter halten die Teilleiter in dem vorgeschriebenen Abstand zueinander. Die Feldabstandhalter verhindern, daß die Teilleiter infolge mechanischer und elektrischer Alltagsbeanspruchungen zusammenschlagen. Feldabstandhalter dieser Art sind z.B. aus EP 0 244 624 oder G 91 12 701.7 bekannt.
Diese Feldabstandhalter bestehen aus einem starren, einstückigen Mittelteil und aus von diesem abstehenden Halteteilen für die Teilleiter.
Ein weiterer Bestandteil dieser Feldabstandhalter ist ein elastischer Dämpfungskörper. Solche Dämpfungskörper stellen eine mechanische Verbindung zwischen den Halteteilen und dem starren Mittelteil (EP 0 244 624) oder zwischen einem Halteteil und dem entsprechenden Teilleiter (G 91 12 701.7) her. Die Dämpfungskörper dämpfen mechanische Schwingungen der Teilleiter.

Aus US-A-3 971 881 ist ein Feldabstandhalter bekannt, dessen im Montagezustand starrer Mittelteil im wesentlichen aus drei identischen Streben aufgebaut ist. Dieser Feldabstandhalter ist nur für einen aus drei Teilleitern bestehenden Bündelleiter geeignet.

Der Bündelleiter kann aus zwei, drei, vier oder auch mehr Teilleitern bestehen. Die aus DE-Prospekt: "FELDABSTANDHALTER", Fa. Karl Pfisterer, 7000 Stuttgart, Prospekt Nr. 1269 bekannten Feldabstandhalter müssen deshalb je nach Anzahl der zu verwendenden Teilleiter vorkonfektioniert werden. Dies bedeutet jedoch hohe Fertigungs- und Logistikkosten. Außerdem ist es möglich, daß eine bestimmte Teilleiterkombination, z.B. das 3er-Bündel nicht mehr erwünscht ist, so daß der entsprechende Feldabstandhalter überflüssig wird. Zudem ist der Abstand der Teilleiter zueinander standardisiert. Der konstruktive Aufbau des Feldabstandhalters muß also an diesen Abstand angepaßt sein. Ein zusätzlicher Nachteil hierbei ist, daß der Abstand in verschiedenen Ländern voneinander abweicht. Der Hersteller muß dies bei dem konstruktiven Aufbau der Feldabstandhalter ebenfalls berücksichtigen. Um alle Kombinationen der Teilleiteranordnungen abzudecken, ist also eine Vielzahl vorkonfektionierter Feldabstandhalter notwendig.

Aus FR-A-1 602 717 ist ein Feldabstandhalter für einen aus zwei Teilleitern bestehenden Bündelleiter bekannt. Er enthält einen Distanzstab, an dessen Stabfreienden klemmbackenartige Halteteile für die Teilleiter befestigt sind. Zwei, drei oder vier solcher Feldabstandhalter sind zu einem einzigen Feldabstandhalter kombinierbar, so daß ein an ein 3er- oder ein 4er-Bündel angepaßter Feldabstandhalter entsteht. Nachteilig hierbei ist es, daß einige Halteteile Bestandteil des Zentralkörpers sind und einen Distanzstab zwischen sich einklemmen. Da jedoch üblicherweise die Durchmesser von Leiterseil und Distanzstab unterschiedlich sind, müssen für den Einsatz eines derartigen Feldabstandhalters mehrere Typen von Halteteilen bereitgestellt werden. Steht lediglich ein einziger, an den Leiterseildurchmesser angepaßter Typ des Halteteils zur Verfügung, muß der Distanzstabdurchmesser an den vorgegebenen Leiterseildurchmesser angepaßt sein. Die Feldabstandhalter gemäß FR-A-1 602 717 müssen deshalb ebenfalls aufwendig und umständlich für Bündelleiter mit unterschiedlicher Teilleiteranzahl vorkonfektioniert werden. Nachteilig ist außerdem die Elastomereinlage des einen benachbarten Distanzstab einklemmenden Halteteils. Der Zentralkörper bleibt deshalb im Montagezustand in sich beweglich. Seine Stabilität im Laufe der Betriebszeit ist dadurch gefährdet. Weiterhin ist aufgrund der notwendigen rechtwinkligen Anordnung der Distanzstäbe zueinander eine Anpassung des Zentralkörpers an fünf bzw. mehr Teilleiter entweder gar nicht oder nur mit großem Aufwand möglich.

Der Erfindung liegt die Aufgabe zugrunde, einen Feldabstandhalter der vorstehend genannten Art so auszugestalten, daß die technischen und wirtschaftlichen Nachteile bei den bekannten Feldabstandhaltern vermieden werden und eine flexiblere Anpassung an veränderte Teilleiteranzahlen möglich ist. Dabei sollen auch die in der Praxis vorkommenden Teilleiterabstände sowie die erforderliche mechanische Stabilität des Zentralkörpers berücksichtigt werden.

Diese Aufgabe wird durch die Merkmalskombination des Anspruches 1 gelöst.

Da der Zentralkörper aus baugleichen Teilen besteht, werden der Bearbeitungsaufwand und damit die Fertigungs- und Logistikkosten erheblich gesenkt.
Das Baukastensystem erlaubt außerdem einen einfachen Zusammenbau des Feldabstandhalters und eine schnelle Anpassung seines Aufbaus an eine veränderte Teilleiteranzahl.

Die Ansprüche 2 bis 6 betreffen besondere Ausführungsformen des Zentralkörpers eines Feldabstandhalters.

Der Zentralkörper ist also an Bündelleiter mit den unterschiedlichsten Teilleiteranzahlen anpaßbar. Der nach Anspruch 3 aufgebaute Feldabstandhalter eignet sich für einen guten Schwingungsschutz zweier horizontal zum Erdboden nebeneinanderliegender Teilleiter.

Eine gewollte Lageänderung wird durch die Anordnung der Streben gemäß Anspruch 7 vereinfacht. Außerdem ist dies eine günstige Lösung, um den Zentralkörper nach dem Baukastensystem aufbauen zu können.

Anspruch 8 schafft eine günstige Voraussetzung für die Aufhebung der Beweglichkeit benachbarter Streben gegeneinander.

Ein nach Anspruch 9 angeordneter und nach Anspruch 10 aufgebauter Gelenkbolzen gewährleistet auch in den Knotenpunkten des Zentralkörpers eine gute mechanische Stabilität. Dies erhöht auch die Stabilität des gesamten Zentralkörpers, wodurch eine mit einem starren, einteiligen Zentralkörper vergleichbare mechanische Steifigkeit und Festigkeit entsteht.
Außerdem sind die das Gelenk bildenden Teile platzsparend zueinander angeordnet.

Durch eine Ausgestaltung der Strebenenden nach Anspruch 11 läßt sich die Spannhülse in einfacher Weise zentrieren. Dies erleichtert den Zusammenbau des gesamten Zentralkörpers. Außerdem erhöht dies die mechanische Stabilität des Zentralkörpers in seinen Knotenpunkten.

Eine nach Anspruch 12 ausgestaltete Ausnehmung an den Innenflächen der Strebenenden ermöglicht die Bildung eines Formschlusses zwischen der Ausnehmung und der Spannhülse. Die Spannhülsen lassen sich dadurch in noch günstigerer Weise zentrieren und die mechanische Stabilität der Knotenpunkte sowie des gesamten Zentralkörpers wird erhöht.

Anspruch 13 zeigt eine für den Gesamtaufbau des Feldabstandhalters vorteilhatte Wirkung des gemäß Anspruch 12 gebildeten Formschlusses. Eine versehentliche Lageänderung der einzelnen Streben in Montageendstellung wird damit verhindert. Dies wirkt sich auch positiv auf die gewünschte mechanische Festigkeit des Zentralkörpers aus.

Die Ansprüche 14 und 15 betreffen eine besondere Ausgestaltungsform der Spannhülse und der Ausnehmung. Dies bewirkt eine verbesserte Fixierung der Spannhülse sowie eine bessere Drehfixierung der Streben gegeneinander.
Außerdem erlaubt der sternförmige Querschnitt der Spannhülse und der Ausnehmung die Ausbildung aller in der Praxis erforderlichen Drehstellungen zwischen zwei benachbarten Streben. Die Vielzahl der Drehstellungen ermöglicht es weiterhin, daß der Zentralkörper des Feldabstandhalters zu einer kinematischen Kette mit mehr als vier Gliedern ausbaubar ist. Dies erlaubt den Einsatz des Feldabstandhalters an Bündelleitern mit mehr als vier Teilleitern.

Anspruch 15 berücksichtigt außerdem die erforderliche mechanische Festigkeit der Knotenpunkte des Zentralkörpers und die Drehfixierung der Streben in ihrem Montageendzustand.
Dabei wirkt die Befestigungsschraube als Drehachse in einem Knotenpunkt.
Die Befestigungsschrauben halten also auch bei nicht angezogener Mutter den gesamten Zentralkörper zusammen.

Die Ansprüche 16 bis 18 betreffen besondere Ausgestaltungsformen der Streben.

Verwendet man gemäß Anspruch 18 ausgestaltete Streben, so läßt sich die Spannhülse platzsparend in den von den Innenflächen der Strebenenden zweier benachbarter Streben abgegrenzten Bereich anordnen. Die Kröpfungen berücksichtigen die Längsausdehnung der Spannhülse. Sie ist an beiden Stirnflächen von jeweils einer Ausnehmung eines Strebenendes zentriert, was den Zusammenbau des Zentralkörpers erleichtert. Bei dieser Anordnung sind die Strebenenden zweier benachbarter Streben durch die Befestigungsschraube gleichmäßig miteinander verspannt. Außerdem gewährleisten derartig angeordnete Strebenenden Schutz vor mechanischen Beschädigungen der innerhalb des durch die Strebenenden gebildeten Innenbereichs einliegenden Teile. Bei einer derartigen Anordnung der Streben liegen die Mittelkörper aller Streben in einer Ebene. Dies wirkt sich günstig auf die mechanische Festigkeit des gesamten Feldabstandhalters aus.

Die Ansprüche 19 und 20 betreffen weitere Ausgestaltungsformen der Streben. Die umgebogenen Schmalseiten der Streben gemäß Anspruch 19 können als Begrenzungsanschläge wirksam sein. In die Aufnahmemulde hineinragende und um die Gelenkachse drehbare Teile sind folglich in ihrem Drehwinkel begrenzt. Überbeanspruchungen der Dämpfungskörper des Feldabstandhalters durch von außen einwirkende Kräfte können so vermieden werden.

Die Streben gemäß Anspruch 20 können fertigungstechnisch einfach hergestellt werden. Eine unterschiedliche Anzahl der Teilleiter muß bei der Konstruktion und der Herstellung der Streben nicht berücksichtigt werden. Auch die Lagerung und der Transport der Feldabstandhalter bzw. ihrer Einzelteile ist gegenüber herkömmlichen Feldabstandhaltern vereinfacht.
Die unterschiedlich langen Mittelkörper der Streben bewirken jedoch, daß der Zentralkörper an die unterschiedlichsten gewünschten bzw. erforderlichen Umrißformen anpaßbar ist und tragen mit dazu bei, daß die unterschiedlich erforderlichen Teilleiterabstände realisiert werden können.

Die Ansprüche 21 bis 23 bewirken eine einfache und platzsparende Montageanordnung der Haltearme an dem Zentralkörper.
Im Montageendzustand kann die Drehfixierung des Gelenkbolzens auf den Haltearm übertragen werden, so daß auf diesen von außen einwirkende Kräfte gedämpft werden können.
Das Befestigungsende und das Halteende sind gemäß Anspruch 23 in dem einstückigen Haltearm integriert. Dadurch reduziert sich die Anzahl der Bauteile für die verschiedenen Funktionen, was den Zusammenbau des Feldabstandhalters vereinfacht. Ein einstückig hergestellter Haltearm ist außerdem günstiger hinsichtlich seiner mechanischen Stabilität. Folglich bewirkt der in seinem Montageendzustand drehfixierte Haltearm eine ortsfeste Fixierung der Klemmhalterung.

Anspruch 24 betrifft eine vorteilhafte Ausgestaltung des Haltearmes sowie der Klemmhalterung, um eine gute mechanische Verbindung zwischen diesen beiden Teilen zu erreichen. Damit ist die Klemmhalterung in ihrem Montageendzustand ortsfixiert angebracht. Die Klemmbacken der Klemmhalterung sind derart ausgestaltet und in ihrem Montageendzustand derart gegeneinander verspannt, daß sie den Teilleiter fest umschließen. Damit ist eine ortsfeste Montage der Feldabstandhalter in vorgeschriebenen Abständen voneinander in Bündelleiterlängsrichtung gewährleistet.
Durch die ortsfeste Fixierung der Klemmhalterungen in ihrem Montageendzuwird auch der standardisierte Abstand der Teilleiter voneinander eingehalten.

In Anspruch 25 ist die Dämpfung von auf die Haltearme einwirkenden Schwingungen berücksichtigt. Damit ist die ortsfeste Fixierung der Haltearme in ihrem Montageendzustand zusätzlich gesichert.

Die Ausgestaltung des Dämpfungskörpers gemäß Anspruch 26 unterstützt den baukastenartigen, einfachen Zusammenbau des Feldabstandhalters.

Ein nach Anspruch 27 ausgebildeter Dämpfungskörper ermöglicht dessen wirksame Vorspannung im Montageendzustand.

Nach Anspruch 28 ist eine gute Kraftübertragung zwischen dem Dämpfungskörper und der Spannhülse möglich. Im Montageendzustand befindet sich die Spannhülse in einer drehfixierten Stellung. Mit ihrem sternförmigen Querschnitt wirkt die Spannhülse als Keilwelle auf den Dämpfungskörper. Deshalb befindet sich der Dämpfungskörper im Montageendzustand ebenfalls in einer ortsfesten Stellung. Dies ist wichtig, um auf den Dämpfungskörper einwirkende Drehkräfte dämpfen zu können.

Eine Ausgestaltung der Spannhülse nach den Ansprüchen 29 und 30 ermöglicht, daß der Dämpfungskörper in allen drei Achsenrichtungen vorgespannt wird. Dadurch werden die Dämpfungseigenschaften des Dämpfungskörpers verbessert und seine Leistungsfähigkeit erhöht sowie seine Lebensdauer verlängert.

Der Dämpfungskörper ist gemäß Anspruch 31 platzsparend innerhalb des Feldabstandhalters angebracht. Außerdem unterstützt diese Ausgestaltung ebenfalls den baukastenartigen Zusammenbau des Feldabstandhalters.

Die formschlüssige Verbindung gemäß Anspruch 32 ermöglicht eine gute Übertragung von Kräften und Drehmomenten der Spannhülse und somit des Dämpfungskörpers auf den Haltearm. Im Montageendzustand ist also auch der Haltearm in einer vorgegebenen Drehstellung angeordnet. Dies ist notwendig, um die standardisierten Abstände zwischen den Teilleitern einzuhalten.

Bei der Ausführungsform nach Anspruch 33 kommt der bekannte Torx-Kraftangriff zur Drehmomentübertragung mit all seinen Vorteilen zum Einsatz.
Der Torx-Kraftangriff ist bekannt aus **H. Wiegand, K.-H. Kloos, W. Thomala, Schraubenverbindungen, 4. Aufl. Bd. 5, S. 264 ff.**

Eine Ausgestaltung des Dämpfungskörpers nach Anspruch 34 erleichtert seine Montage. Der Auflagekragen des Dämpfungskörpers wirkt außerdem als Beilagscheibe vor dem Verspannen eines Strebenendes mit dem Befestigungsende des Haltearmes.
In seiner Montageendstellung ist der Dämpfungskörper in Teilleiterlängsrichtung vorgespannt. Außerdem ermöglicht der elastische Auflagekragen eine Beweglichkeit des Haltearmes in Teilleiterlängsrichtung. Somit wird insgesamt das Dämpfungsverhalten des Feldabstandhalters verbessert.

Ein Auflagekragen nach Anspruch 35 bewirkt einen geringeren Abrieb und einen geringeren Verschleiß des Dämpfungskörpers im Montageendzustand. Dadurch ist der Dämpfungskörper leistungsfähiger und seine Lebensdauer ist erhöht.

Damit die Knotenpunkte des Zentralkörpers von beiden Seiten entlang der Rotationsachse gleichmäßig beansprucht werden, ist eine Ausgestaltung des Dämpfungskörpers nach Anspruch 36 günstig. Gleichzeitig erleichtert dies die Montage des Dämpfungskörpers.

Gemäß den Ansprüchen 37 und 38 wird die Vorspannung des Dämpfungskörpers in seinem Montageendzustand in alle drei Achsenrichtungen zusätzlich verbessert.

Gemäß Anspruch 39 ist eine stoffschlüssige Verbindung zwischen dem Dämpfungskörper und dem Befestigungsende des Haltearmes möglich. Sie vermeidet das Auftreten von Spaltkorrosion und gewährleistet somit eine dauerhafte Funktionssicherheit des Haltearmes. Außerdem läßt sich die Montagezeit des Feldabstandhalters durch den einteiligen Aufbau des Dämpfungskörpers reduzieren.

Ein nach Anspruchen 40 aufgebauter Dämpfungskörper gewährleistet den notwendigen Potentialausgleich zwischen dem Zentralkörper und einem Haltearm.

Anspruch 41 betrifft eine platzsparende und sichere Möglichkeit, den Potentialausgleich zwischen einem Haltearm und einer Strebe herzustellen, wenn der Dämpfungskörper aus einem elektrisch nicht leitenden Werkstoff besteht.
Zur Befestigung der Kontaktfeder werden keine zusätzlichen Montageteile benötigt, was also eine kostengünstige Lösung darstellt. Es muß nur die Ausgestaltung der Federenden berücksichtigt werden.

Anspruch 42 betrifft eine besondere Ausführungsform des Befestigungsendes eines Haltearmes. Der Radialvorsprung ragt in die Aufnahmemulde des Strebenendes hinein. Bei einer Relativdrehung des Haltearmes gegenüber der Strebe wirkt die Muldenseitenwand als Drehbegrenzungsanschlag. Dies soll verhindern, daß von außen einwirkende Kräfte den Feldabstandhalter beschädigen oder zerstören.

Ein gemäß Anspruch 43 ausgestaltetes Befestigungsende berücksichtigt die verschiedenen Drehstellungen des Haltearmes in seinem Montageendzustand.

Anspruch 44 betrifft eine weitere elektrische Überbrückungsmöglichkeit des aus Isolierstoff bestehenden Dämpfungskörpers.
Der hierbei verwendete Kontaktstift ist vor mechanischen Beschädigungen gut geschützt.

Anspruch 45 betrifft eine besondere Ausführungsform des Zentralkörpers. Die Verwendung nur einer Strebe als Zentralkörper ist dazu geeignet, ein senkrechtes Zweier-Bündel mit etwa lotrecht zum Erdboden übereinander liegenden Teilleiterquerschnitten ausreichend vor Schwingungen zu schützen.

Anspruch 46 berücksichtigt die notwendige Stabilität der Strebe.

Anhand der Zeichnungen werden verschiedene Ausführungsbeispiele des Erfindungsgegenstandes näher erläutert. Es zeigen:
- Fig. 1: eine Draufsicht des Feldabstandhalters mit zwei Streben für ein Zweier-Bündel;
- Fig. 2: eine Draufsicht des Feldabstandhalters für ein Dreier-Bündel;
- Fig. 3: eine Draufsicht des Feldabstandhalters für ein Vierer-Bündel:
- Fig. 4: eine Draufsicht der Strebe;
- Fig. 5: eine Seitenansicht der Strebe;
- Fig. 6: eine Draufsicht der Spannhülse;
- Fig. 7: eine Seitenansicht der Spannhülse;
- Fig. 8: eine Draufsicht einer Hälfte des Dämpfungskörpers;
- Fig. 9: eine Seitenansicht der Hälfte des Dämpfungskörpers;
- Fig. 10: eine Draufsicht des Haltearmes;
- Fig. 11: eine Seitenansicht des Haltearmes;
- Fig. 12: eine Draufsicht der Teilhülse;
- Fig. 13: eine Seitenansicht der Teilhülse;
- Fig. 14: eine Draufsicht eines weiteren Dämpfungskörpers;
- Fig. 15: eine Seitenansicht dieses Dämpfungskörpers;
- Fig. 16: eine Draufsicht dieses Dämpfungskörpers in der Fig. 14 entgegengesetzten Blickrichtung;
- Fig. 17: eine Draufsicht eines weiteren Haltearmes;
- Fig. 18: eine Seitenansicht dieses Haltearmes;
- Fig. 19: die Teildarstellung eines weiteren Haltearmes;
- Fig. 20: die Schnittdarstellung des an diesen Haltearm angeformten Radialvorsprunges entsprechend dem Schnitt XX-XX in Fig. 19;
- Fig. 21: die Teildarstellung eines weiteren Haltearmes;
- Fig. 22: die Schnittdarstellung des an diesen Haltearm angeformten Radialvorsprunges mit einliegendem Kontaktstift entsprechend dem Schnitt XXII-XXII in Fig. 21;
- Fig. 23: die Draufsicht des an den Strebenenden fixierten Haltearmes entsprechend der Ansicht XXIII in Fig. 2, teilweise geschnitten;
- Fig. 24: eine Draufsicht des Feldabstandhalters mit einer Strebe für ein Zweier-Bündel;

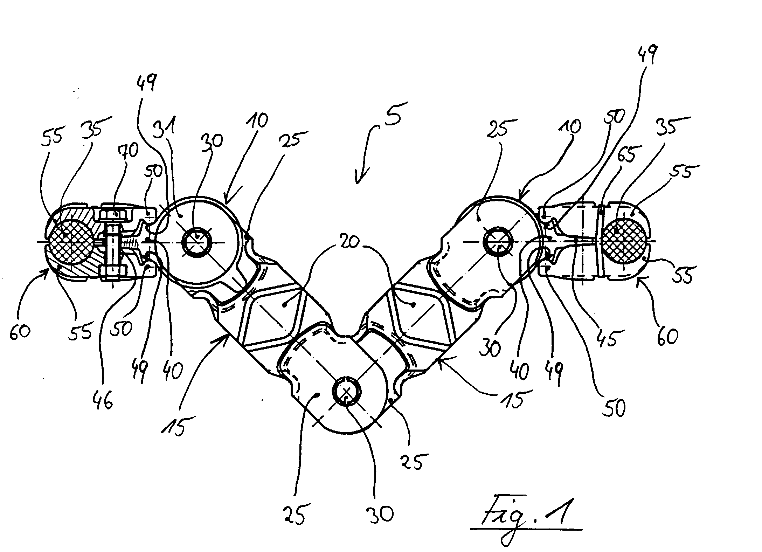

In Fig. 1 ist der aus zwei Streben 15 bestehende Zentralkörper 5 eines Feldabstandhalters erkennbar. Der Zentralkörper 5 bildet eine offene kinematische Kette. Er ist V-förmig ausgebildet mit gleichlangen V-Schenkeln. Die Freienden der beiden V-Schenkel sind durch die einander abgewandten Strebenenden 25 beider Streben 15 gebildet. Sämtliche Strebenenden 25 sind gleich dimensioniert. Die einander zugewandten und sich teilweise überdeckenden Strebenenden 25 der beiden Streben 15 sind durch einen Gelenkbolzen im Bereich einer Befestigungsschraube 30 gelenkig miteinander verbunden. Der Gelenkbolzen ist jedoch auch verrastbar, so daß die Beweglichkeit der Streben 15 gegeneinander aufhebbar ist. An den als Freienden der V-Schenke wirksamen Strebenenden 25 ist jeweils ein Haltearm 10 fixiert. Haltearm 10 und das zugehörige Strebenende 25 sind ebenfalls durch einen bereits erwähnten Gelenkbolzen miteinander verbunden. Ein in Fig. 1 kreisrunder Teilbereich des Haltearmes 10 und das zugehörige Strebenende 25 überdecken sich teilweise, wobei der kreisrunde Teilbereich des Haltearms 10 einen etwas größeren Durchmesser aufweist als das äußere Ende des zugehörige Strebenendes 25. Die einander zugewandten Stirnflächen von Haltearm 10 und zugehörigem Strebenende 25 liegen aneinander an, während die in Zeichnungsebene dem Strebenende 25 abgewandte Stirnfläche des Haltearms 10 von einer kreisrunden Scheibe 31 abgedeckt ist. Der Durchmesser der Scheibe 31 entspricht demjenigen des äußeren Endes des Strebenendes 25. Die Scheibe 31 ist ebenso wie die Strebenenden 25 von einer Befestigungsschraube 30 durchsetzt. In Zeichnungsebene von Fig. 1 ist der am Strebenende 25 anliegende Teilbereich des einen Haltearms 10 von der kreisrunden Scheibe 31 abgedeckt, während der entsprechende Teilbereich des anderen Haltearms 10 vom Strebenende 25 abgedeckt ist.
Die Haltearme 10 weisen jeweils in Richtung auf den zugehörigen Teilleiter 35 des Bündelleiters.

Der teilleiternahe Bereich des Haltearmes 10 ist das Halteende 40. Es ist durch eine auf den Teilleiter 35 gerichtete Zunge 45 begrenzt. Von der Zunge 45 ausgehend schließt sich in Richtung auf das Strebenende 25 ein verdickter Bereich des Halteendes 40 mit zwei Ausnehmungen 49 an. In diese Ausnehmungen 49 greifen Wulste 50 formschlüssig ein. Jeweils eine Wulst 50 ist ein einstückiger Bestandteil einer Klemmbacke 55. Die Klemmhalterung 60 besteht aus zwei Klemmbacken 55, aus einem den Umfang der Klemmbacken 55 umfassenden elastischen Ring 65 und aus einer in den Klemmbacken 55 einliegenden Klemmschraube 70. Die Klemmschraube 70 durchgreift außerdem eine Zungenbohrung 46 der Zunge 45.
Der elastische Ring 65 hält die beiden Klemmbacken 55 auch in ihrem nicht gegeneinander verspannten Zustand ortsfest am Halteende 40 des Haltearmes 10. Die Klemmhalterung 60 wird durch Festdrehen der Klemmschraube 70 geschlossen. In diesem Zustand umfassen die Klemmbacken 55 formschlüssig den Querschnitt des Teilleiters 35.

Die Teilleiterquerschnitte sind gegenüber dem Erdboden in horizontaler Richtung nebeneinanderliegend angeordnet. Der Abstand zwischen Halteende 40 und dem an einem Strebenenden 25 anliegenden Bereich des Haltearmes 10 ist in Fig. 1 deshalb gegenüber den folgenden Figuren verkürzt. Dies ist notwendig, um auch bei entsprechend Fig. 1 angeordneten Teilleiterquerschnitten den standardisierten Abstand zwischen zwei Teilleitern 35 herzustellen.

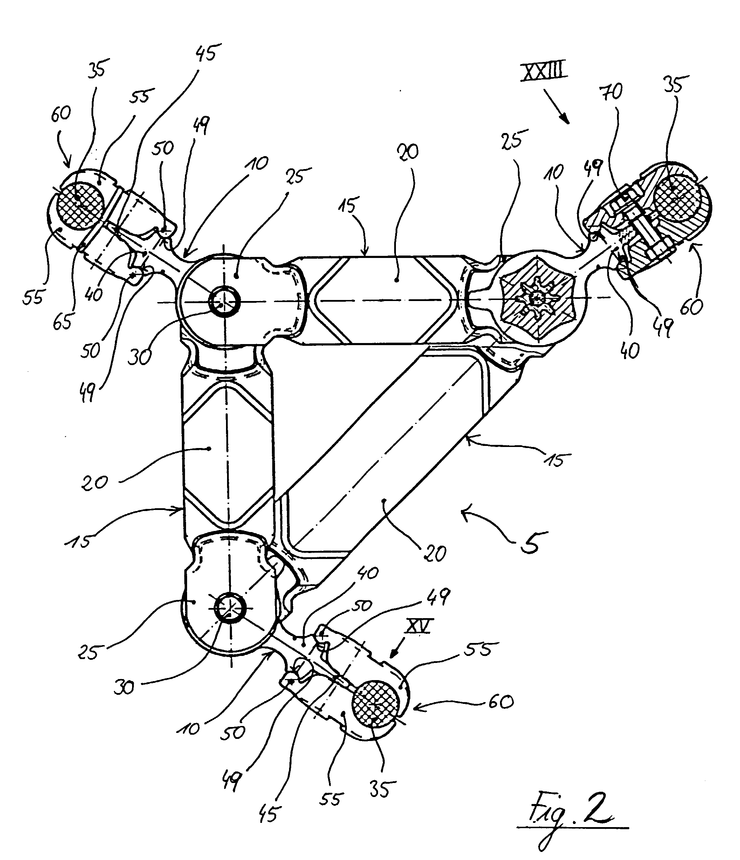

Fig. 2 zeigt den Zentralkörper 5 eines Feldabstandhalters und in dessen Knotenpunkten fixierte Haltearme 10. Der Zentralkörper 5 ist als übergeschlossene kinematische Kette ausgebildet. Die Glieder der übergeschlossenen kinematischen Kette bestehen aus baugleichen Streben 15, die gegebenenfalls unterschiedlich lang sind. Der Zentralkörper 5 bildet in der Draufsicht ein gleich-schenkliges Dreieck. Die Streben 15 - in diesem Fall die Hypothenuse und die beiden Schenkel des Dreiecks - unterscheiden sich nur durch einen unterschiedlich langen Mittelkörper 20.
An den Mittelkörper 20 schließt sich zu beiden Seiten entlang seiner Längserstreckung jeweils ein Strebenende 25 an. Jeweils zwei benachbarte Streben 15 sind mit ihren einander zugewandten Strebenenden 25 durch den Gelenkbolzen im Bereich der Befestigungsschraube 30 miteinander verbunden.
An jedem Gelenkbolzen ist ein Haltearm 10 fixiert, der in Richtung auf den zugehörigen Teilleiter 35 des Bündelleiters weist.
Alle Haltearme 10 sind im strebennahen Bereich von den einander zugewandten Strebenenden 25 jeweils zweier benachbarter Streben 15 beidseitig abgedeckt. Die kreisrunde Scheibe 31 (Fig. 1) ist dadurch bei dem Feldabstandhalter in Fig. 2 überflüssig. Ansonsten entspricht die Verbindung von Teilleiter 35, Klemmhalterung 60, Haltearm 10 und Strebenende 25 der Beschreibung in Fig. 1.

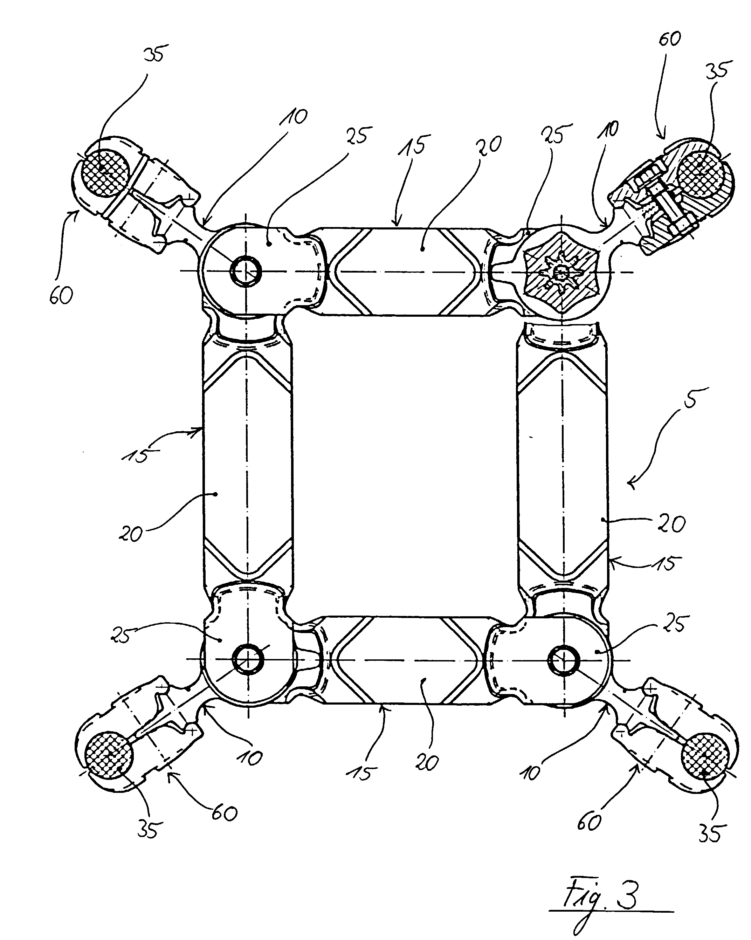

Fig. 3 läßt einen Feldabstandhalter für vier Teilleiter 35 erkennen. Der aus vier Streben 15 bestehende Zentralkörper 5 bildet ein Rechteck. Wie bei Fig. 2 sind zwei verschiedene Längentypen des Mittelkörpers 20 vorhanden.
Bei nicht verrasteten Gelenkbolzen im Bereich der Strebenenden 25 lassen sich die Streben 15 gegeneinander bewegen. Der Feldabstandhalter in Fig. 3 bildet also eine zwangläufig geschlossene kinematische Kette.
Ansonsten entsprechen die Verbindung der Streben 15 miteinander, die Anordnung der Haltearme 10 und die Anordnung der Klemmhalterungen 60 der Beschreibung in Fig. 1 bzw. Fig. 2.

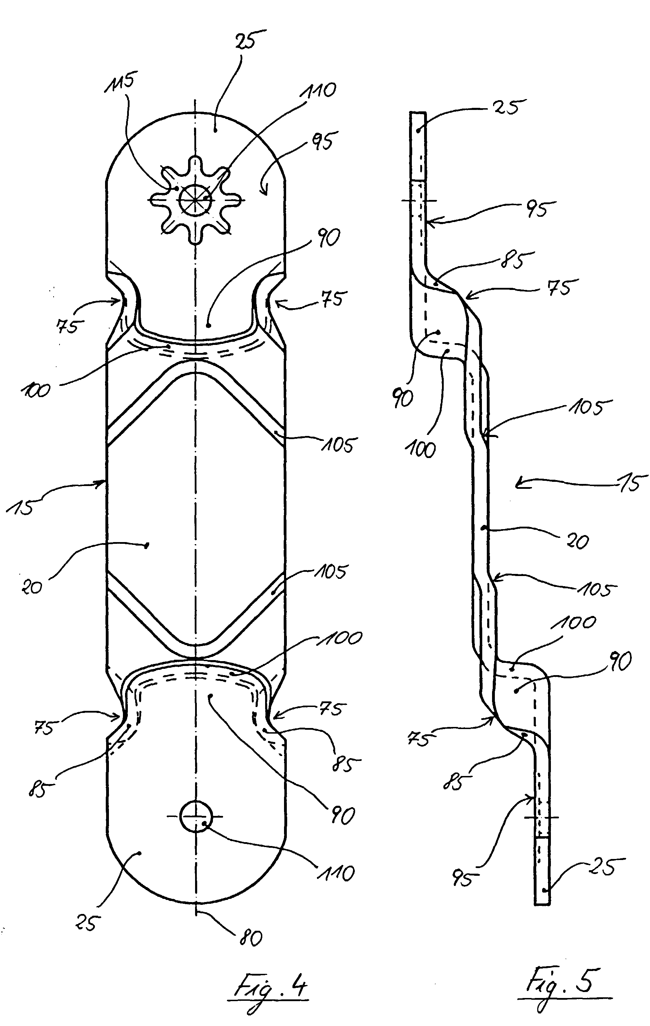

In Fig. 4 ist eine einzelne Strebe 15 zu erkennen. Sie besteht aus dem langgestreckten, rechteckförmigen Mittelkörper 20 und den beiden jeweils an ein Längsende des Mittelkörpers 20 angeformten Strebenenden 25. Die Strebenenden 25 sind gegenüber der Ebene des Mittelkörpers 20 in entgegengesetzte Richtungen gekröpft. Dies ist in Fig. 5 zu erkennen.
Die Strebenenden 25 haben in Fig. 4 eine U-Form. Der U-Grund bildet jeweils ein Längsende der gesamten Strebe 15. Der U-Grund hat etwa die Form eines Halbkreises. An den U-Grund schließen sich die U-Schenkel an. Der Abstand der beiden U-Schenkel eines Strebenendes 25 entspricht der Länge der Schmalseite des Mittelkörpers 20. Die U-Schenkel der Strebenenden 25 sind Verlängerungen der Längskanten des Mittelkörpers 20.
Diese Verlängerungen sind in Biegebereichen 75 unterbrochen. In den Biegebereichen 75 sind die gekröpften Schmalseiten der Streben 15 in Richtung der Längsachse 80 umgebogen. Die umgebogenen Schmalseiten der Streben 15 bilden die Seitenwände 85 der Aufnahmemulde 90. Die Höhe der Seitenwände 85 verläuft in etwa senkrecht zur Zeichnungsebene in Fig. 4. Ausgehend von der Innenfläche 95 des Strebenendes 25 vergrößert sich die Höhe der Seitenwände 85 in Richtung auf den Mittelkörper 20 kontinuierlich. Im Bereich ihrer größten Höhe - dies entspricht etwa dem Abstand zwischen der Innenfläche 95 und dem Mittelkörper 20 - sind die Seitenwände 85 durch eine Muldenwand 100 miteinander verbunden. Sie hat eine gleichbleibende Höhe und verläuft kreisbogenartig entlang der Schmalseite des Mittelkörpers 20. Ihre Höhe entspricht der größten Höhe der Seitenwände 85. Die Muldenwand 100 ist mit ihrer Konkavseite dem U-Grund des Strebenendes 25 zugewandt.

Der Mittelkörper 20 ist in seinen den Strebenenden 25 zugewandten Bereichen derart gebogen, daß seine Oberfläche in Fig. 4 zwei V-förmige Bügel 105 aufweist. Die Konkavseiten der Bügel 105 sind einander zugewandt und begrenzen den zentralen Teil des Mittelkörpers 20. Hinsichtlich der Längsachse 80 sind die Bügel 105 symmetrische Teile. Der V-Grund des Bügels 105 tangiert die Muldenwand 100 in dem Punkt, in dem die Längsachse 80 die Muldenwand 100 schneidet.
Verschiedene Streben 15 unterscheiden sich durch einen variablen Abstand der V-Gründe der Bügel 105. Dadurch entstehen die längenvariablen, aber ansonsten baugleichen Streben 15. Die Streben 15 sind punktsymmetrische Teile mit einer Punktsymmetrieachse, die senkrecht zur Zeichnungsebene in Fig. 5 verläuft.

Die Strebenenden 25 sind von jeweils einer Lagerbohrung 110 durchsetzt. Der Mittelpunkt der Lagerbohrung 110 befindet sich auf der Längsachse 80. Die Lagerbohrung 110 dient der Zentrierung des Gelenkbolzens, wobei die Befestigungsschraube 30 die Lagerbohrung 110 durchsetzt. An der Innenfläche 95 des Strebenendes 25 ist die Lagerbohrung 110 in Umfangsrichtung von einer Ausnehmung 115 umgeben. An der Ausnehmung 115 sind in Umfangsrichtung gleichmäßig verteilt acht fingerförmige Ausbuchtungen angeformt. Die Ausbuchtungen sind vom Mittelpunkt der Lagerbohrung 110 aus radial nach außen gerichtet. Die Ausnehmung 115 hat deshalb die Form eines Sternes. Die Oberfläche dieses Sterns ist gegenüber der Innenfläche 95 abgesenkt.

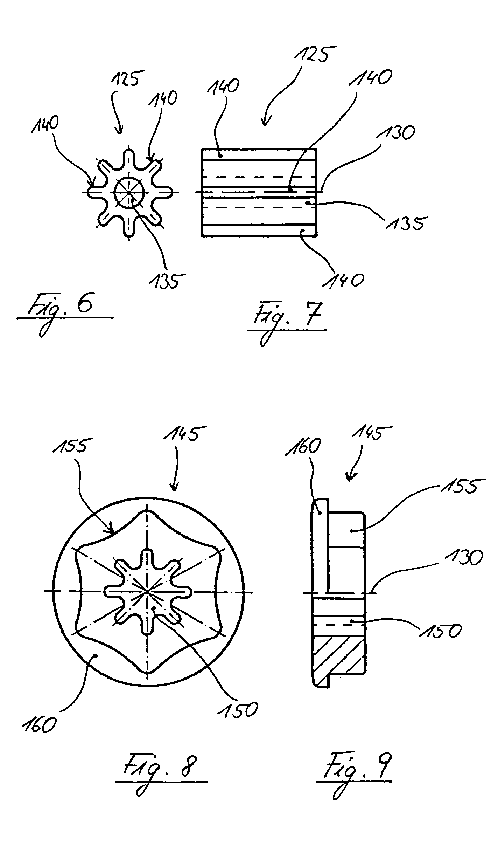

Die abgesenkte Oberfläche entspricht dem Querschnitt der in Fig. 6 und Fig. 7 dargestellten Spannhülse 125. Somit läßt sich die Spannhülse 125 formschlüssig mit der Innenfläche 95 verbinden. Außerdem ist die Spannhülse 125 durch die fingerartigen Ausbuchtungen der Ausnehmung 115 drehfixiert. Fig. 7 läßt die Spannhülse 125 als einen Hohlzylinder erkennen. Die Spannhülse 125 ist entlang der Rotationsachse 130 von einem Schraubenhohlkanal 135 durchsetzt. Der Querschnitt des Schraubenhohlkanales 135 ist kreisförmig, wobei sein Mittelpunkt der Rotationsachse 130 entspricht. Die Befestigungsschraube 30 durchsetzt den Schraubenhohlkanal 135 im Montageendzustand. Die Spannhülse 125 trägt in Umfangsrichtung gleichmäßig verteilt acht Längsrippen 140. In ihrer Längsrichtung sind die Längsrippen 140 parallel zueinander und parallel zur Rotationsachse 130 angeordnet. Ihre Längsausdehnung entspricht dem Abstand der beiden Stirnflächen der Spannhülse 125.
Eine Stirnfläche der Spannhülse 125 ist in Fig. 6 erkennbar. Der Querschnitt der Längsrippen 140 erstreckt sich vom Mittelpunkt des Schraubenhohlkanales 135 aus gesehen fingerartig radial nach außen. Die Spannhülse 125 hat somit einen sternförmigen Querschnitt, der dem sternförmigen Innenquerschnitt der Ausnehmung 115 entspricht.

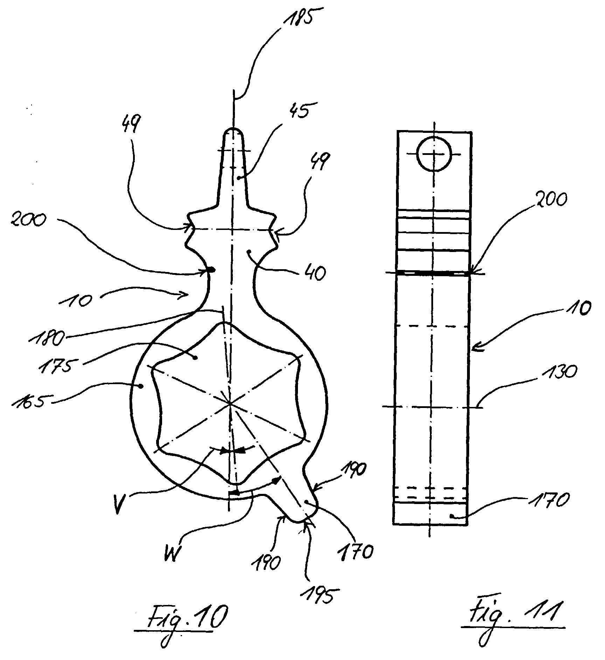

Fig. 8 und Fig. 9 lassen den Dämpfungskörper 145 erkennen. Im Montageendzustand ist die Spannhülse 125 in den Dämpfungskörper 145 eingebracht. Zu diesem Zweck ist der Dämpfungskörper 145 entlang seiner Rotationsachse 130 von einem Hülsenhohlkanal 150 durchbrochen. Der Mittelpunkt des Hülsenhohlkanales 150 entspricht der Rotationsachse 130. Der Querschnitt des Hülsenhohlkanales 150 entspricht dem Querschnitt der Spannhülse 125, so daß der Hülsenhohlkanal 150 die Spannhülse 125 im Montageendzustand formschlüssig umfaßt.

Der Hülsenhohlkanal 150 ist entlang der Rotationsachse 130 von einem Sechskantzylinder 155 und einem Auflagekragen 160 umgeben. Deren Mittelpunkte entsprechen ebenfalls der Rotationsachse 130. Die Aufbauhöhe des Sechskantzylinders 155 und des daran einstückig angeformten Auflagekra160 entlang der Rotationsachse 130 entsprechen zusammen der Aufbauhöhe (Fig. 9) des Dämpfungskörpers 145. Dessen Aufbauhöhe ist etwa halb so groß wie die Längsausdehnung der Spannhülse 125 in Fig. 7.
Der Sechskantzylinder 155 hat in Fig. 8 das Aussehen eines Sternes mit sechs abgerundeten Ecken. Zwei benachbarte abgerundete Ecken sind jeweils durch eine gebogene Seitenfläche miteinander verbunden. Die Seitenflächen bilden in Fig. 8 Kreisbögen, die mit ihrer Konvexseite der Rotationsachse 130 des Dämpfungskörpers zugewandt sind.
Der Auflagekragen 160 ist in Fig. 8 als kreisrunde Scheibe geformt. Der Radius des Auflagekragens 160 ist etwas größer als der Außenradius des Sechskantzylinders 155.
Der gesamte Dämpfungskörper im Montageendzustand besteht aus zwei gleichen Dämpfungskörpern 145. Der Dämpfungskörper 145 kann aus elektrisch leitendem Material oder auch aus einem Isolierwerkstoff gefertigt sein.

Der Dämpfungskörper 145 verbindet die Spannhülse 125 mit dem in Fig. 10 und Fig. 11 dargestellten Haltearm 10.
Der Haltearm 10 enthält das Halteende 40 und das Befestigungsende 165. Die Ausgestaltung des Halteendes 40 sowie seine Funktion sind in Fig. 2 beschrieben.
Das Befestigungsende 165 hat in Fig. 10 eine kreisrunde Umrißgestalt. Die kreisrunde Umrißgestalt wird nur im Bereich des einstückig an das Befestigungsende 165 angeformten Radialvorsprunges 170 und des ebenfalls an das Befestigungsende 165 einstückig angeformten Halteendes 40 unterbrochen. Das Befestigungsende 165 ist entlang der Rotationsachse 130 von der Aufnahme 175 für den Dämpfungskörper 145 durchbrochen. Der Hohlquerschnitt der Aufnahme 175 in Fig. 10 entspricht der Umrißform des Sechskantzylinders 155 in Fig. 8. Somit ist der Dämpfungskörper 145 im Montageendzustand formschlüssig in die Aufnahme 175 eingebracht. Der Radius des Auflagekragens 160 entspricht etwa dem Umrißradius des Befestigungsendes 165. Die Aufnahmesymmetrieachse 180 ist gegenüber der Armsymmetrieachse 185 um einen Versatzwinkel V versetzt. Der Versatzwinkel V beträgt 5°. Damit ist gewährleistet, daß im Montageendzustand der Radial-vorsprung 170 mittig in der Aufnahmemulde 90 einliegt.
Die Aufbauhöhe der Aufnahme 175 entlang der Rotationsachse 130 ist doppelt so groß bemessen wie die Aufbauhöhe des Sechskantzylinders 155 entlang der Rotationsachse 130 in Fig. 9. Somit läßt sich in die Aufnahme 175 beidseitig je ein Dämpfungskörper 145 einbringen. Die Aufbauhöhe der Aufnahme 175 bleibt entlang der Armsymmetrieachse 185 am gesamten Haltearm 40 erhalten (Fig. 11).

Etwa gegenüber dem Halteende 40 ist der Radialvorsprung 170 am Befestigungsende 165 angeformt. Der Radialvorsprung erstreckt sich vom Mittelpunkt des Befestigungsendes 165 aus gesehen nasenartig radial nach außen. Seine Symmetrieachse erstreckt sich ebenfalls radial nach außen. Sie bildet mit der Armsymmetrieachse 185 den Winkel W. Der Winkel W ist grundsätzlich variabel. Er ist so zu bemessen, daß der Radialvorsprung 170 eine Drehung des Haltearmes 10 um die Rotationsachse 130 wirksam begrenzt. Dazu schlägt im Extremfall eine Anschlagwand 190 des Radialvorsprunges 170 an einer Seitenwand 85 der Aufnahmemulde 90 an. Die Randkanten der Anschlagwände 190 verlaufen etwa radial nach außen, jedoch beiderseits der Symmetrieachse des Radialvorsprunges 170 konisch aufeinander zu. Ihre gedachten Verlängerungen schneiden sich in dieser Symmetrieachse. In ihrem radial am weitesten außenliegenden Bereich sind die Anschlagwände 190 durch eine Nasenvorderwand 195 miteinander verbunden. Die Übergangsflächen zwischen den Oberflächen der Anschlagwände 190 und der Oberfläche der Nasenvorderwand 195 sind leicht abgerundet. Die Oberfläche der Nasenvorderwand derwand 195 ist im Montageendzustand etwa parallel zur Oberfläche der Muldenwand 100 angeordnet.

In Umfangsrichtung des Befestigungsendes 165 können auch mehrere Radialvorsprünge 170 angeformt sein.
Die Übergänge zwischen den Oberflächen der Anschlagwände 190 und der Mantelfläche des Befestigungsendes 165 sind ebenfalls abgerundet.
Der Umriß des Befestigungsendes 165 ist beiderseits der Armsymmetrieachse 185 durch einen kreisbogenförmigen Übergang mit den Ausnehmungen 49 des Haltearmes 40 verbunden. Der Übergangsbereich zwischen dem Befestigungsende 165 und dem Halteende 40 ist dadurch in Fig. 10 ähnlich einer bi-konkaven Linse gestaltet. Die Verlängerungen der Mantelfläche des Befestigungsendes 165 beiderseits der Armsymmetrieachse 185 sind dementsprechend Teile der Innenflächen von Hohlzylindern. Diese Innenflächen entsprechen in Fig. 11 der Zeichnungsebene. Eine solche Innenfläche ist entlang der Rotationsachse 130 mit einer Einkerbung 200 versehen. In die Einkerbung 200 wird ein Federende der Kontaktfeder 205 eingelegt und elektrisch leitend mit dem Haltearm 10 kontaktiert.

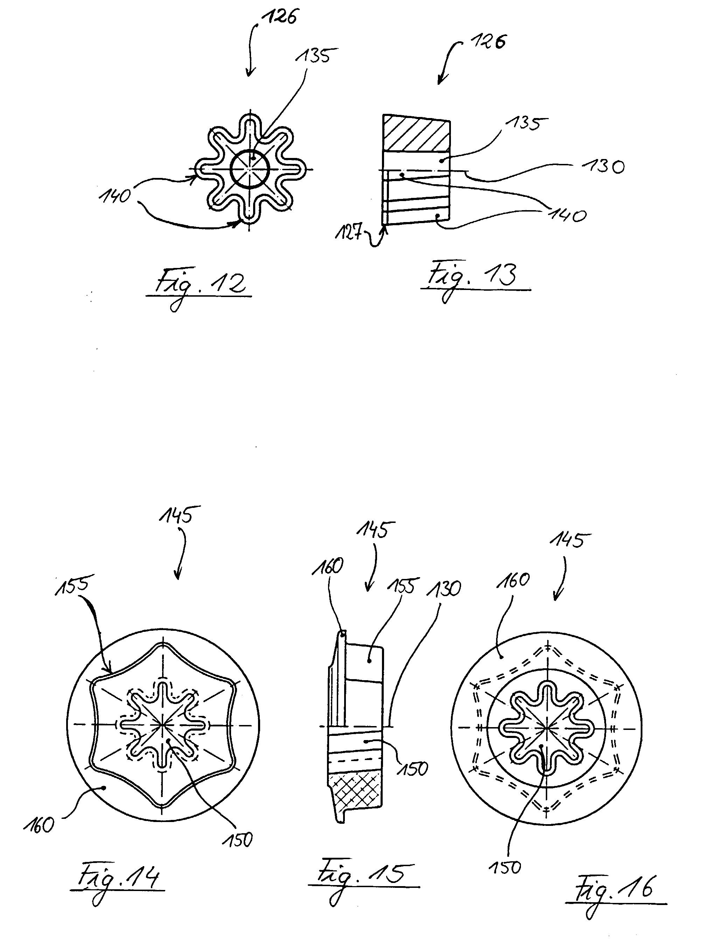

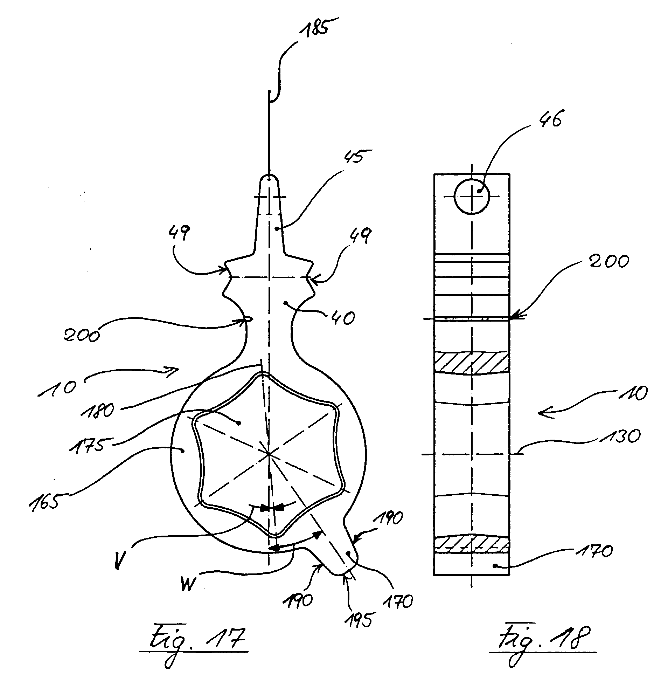

In Fig. 12 und Fig. 13 ist eine weitere Ausführungsform der Spannhülse 125 dargestellt. Die Spannhülse 125 setzt sich aus zwei Teilhülsen 126 zusammen. Die Aufbauhöhe der Teilhülse 126 in Richtung der Rotationsachse 130 ist folglich halb so groß wie die entsprechende Aufbauhöhe der Spannhülse 125 (Fig. 7).
Der Aufbau der Teilhülse 126 ist grundsätzlich derselbe wie der Aufbau der Spannhülse 125. Um einen zentralen Schraubenhohlkanal 135 sind in dessen Umfangsrichtung acht Längsrippen 140 angeordnet (Fig. 12). Die gedachten Verlängerungen der Längsrippen 140 haben jedoch einen gemeinsamen Schnittpunkt auf der Rotationsachse 130. Die Teilhülse 126 weist einen konischen Verlauf auf. Die Teilhülse 126 ist in Fig. 13 kegelstumpfförmig. Im Montageendzustand sind zwei Teilhülsen 126 aneinandergereiht. Dabei liegen die Stirnseiten mit dem kleineren Außendurchmesser aneinander an.
Im Bereich der Stinrseite mit dem größeren Außendurchmesser ist die Teilhülse 126 in Richtung der Rotationsachse 130 nicht kegelstumpfförmig ausgebildet. Dieser Bereich ist als ein Absatz 127 begrenzt. Sein Außendurchmesser ist entlang der Rotationsachse 130 konstant. Seine Aufbauhöhe in Rotationsachsenrichtung entspricht etwa der Tiefe der Ausnehmung 115 in das Strebenende 125. Der Absatz 127 ist für die formschlüssige Verbindung der Teilhülse 126 mit dem Strebenende 25 sowie für die Drehfixierung der Teilhülse 126 notwendig.

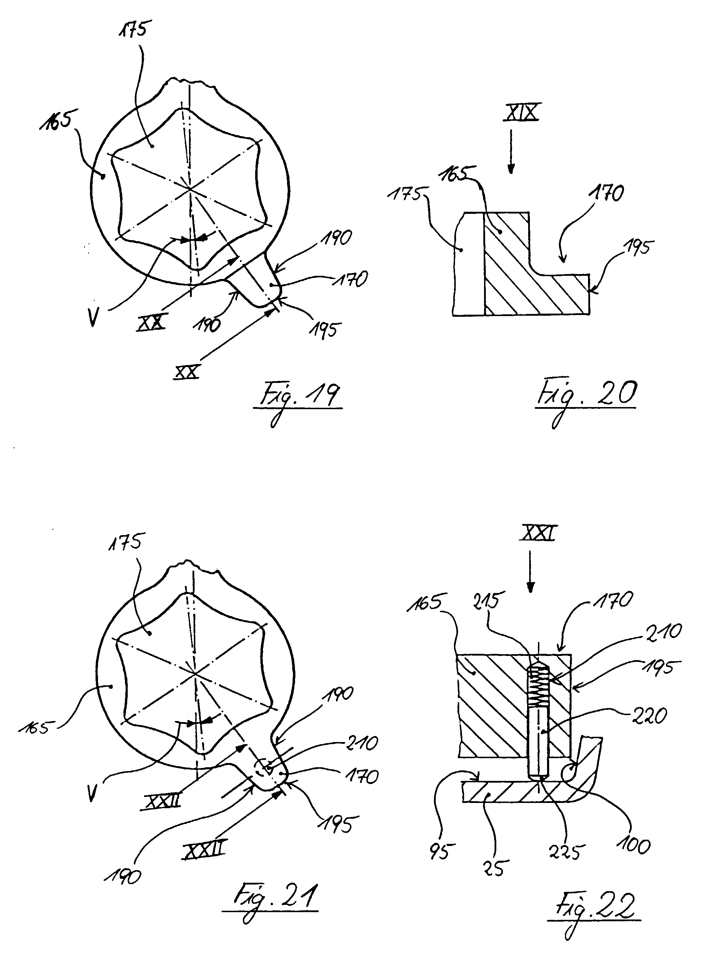

In Fig. 14 bis Fig. 16 ist eine weitere Ausführungsform des Dämpfungskörpers 145 dargestellt.
Der Dämpfungskörper 145 in Fig. 14 bis Fig. 16 ist in der gleichen Anordnung von Auflagekragen 160, Sechskantzylinder 145 und Hülsenhohlkanal 150 wie der Dämpfungskörper 145 aus Fig. 8 und Fig. 9 aufgebaut. Der Hülsenhohlkanal 150 in Fig. 14 ist an die Umrißform der Teilhülse 126 (Fig. 12, Fig. 13) angepaßt. Der Hülsenhohlkanal 150 verläuft in Rotationsachsenrichtung konisch (Fig. 15). Der größte Querschnitt des Hülsenhohlkanales 150 befindet sich im Bereich des Auflagekragens 160, während die Stirnseite des Sechskantzylinders 155 den kleinsten Querschnitt des Hülsenhohlkanales 150 aufweist. Der Querschnitt des Hülsenhohlkanales 150 ist durchgehend etwas kleiner als der Querschnitt der in den Dämpfungskörper 145 einsetzbaren Teilhülse 126. Auf diese Weise wird im Montageendzustand eine Vorspannung des Dämpfungskörpers 145 in allen drei Achsenrichtungen bewirkt. Die Aufbauhöhe des Dämpfungskörpers 145 in Rotationsachsenrichtung (Fig. 15) ist etwas größer als die entsprechende Aufbauhöhe der Teilhülse 126. Dadurch ist im Montageendzustand eine wirksamere Vorspannung des Dämpfungskörpers 145 in Rotationsachsenrichtung ermöglicht.
Der Sechskantzylinder 155 weist ebenfalls einen konischen Verlauf auf (Fig. 15). Der größte Außendurchmesser des Sechskantzylinders 155 befindet sich in Fig. 14 am Auflagekragen 160 und entspricht dem Außendurchmesser des Sechskantzylinders 155 in Fig. 8. Die Stirnseite des Sechskantzylinders 155 weist den kleinsten Außendurchmesser auf. Die gedachte Konusspitze des Sechskantzylinders 155 (Fig. 15) liegt folglich auf der der Stirnseite des Sechskantzylinders 155 zugewandten Seite des Dämpfungskörpers 145. Der Auflagekragen 160 in Fig. 15 hat in seinem an den Sechskantzylinder 155 sich anschließenden Bereich seinen größten Durchmesser. Er entspricht außerdem dem Durchmesser des Auflagekragens 160 in Fig. 8. Die Erstreckung des Auflagekragens 160 in Richtung der Rotationsachse 130 ist in Fig. 9 und Fig. 15 etwa gleich. Während der Durchmesser des Auflagekragens 160 in Fig. 9 in Rotationsachsenrichtung im wesentlichen konstant ist, verringert sich jedoch der Durchmesser des Auflagekragens 160 in Fig. 15 in Richtung der dem Sechskantzylinder 155 abgewandten Stirnseite des Auflagekragens 160 kontinuierlich. Der kleinste Durchmesser des Auflagekragens 160 ist etwas größer als der größte Außendurchmesser des Hülsenhohlkanales 150 (Fig. 16). In Fig. 15 hat der Auflagekragen 160 wegen des sich verkleinernden Durchmessers die Form eines Hutes.

In Fig. 17 und Fig. 18 ist eine weitere Ausführungsform des Haltearmes 10 erkennbar. Der Haltearm 10 in Fig. 17 unterscheidet sich von der Ausführungsform des Haltearmes 10 in Fig. 10 nur durch die Ausgestaltung der Aufnahme 175.
Die Aufnahme 175 in Fig. 17 ist derart ausgestaltet, daß zwei gemäß Fig. 14 bis Fig. 16 aufgebaute Dämpfungskörper 145 mit ihren Sechskantzylindern 155 in die Aufnahme 175 formschlüssig einsetzbar sind. Die Ebene mit dem kleinsten Außendurchmesser der Aufnahme 175 fällt in Fig. 18 mit der zur Armsymmetrieachse 185 (Fig. 17) parallelen Symmetrieachse zusammen. Die Umrißform der Aufnahme 175 in Fig. 17 und Fig. 18 ist durchgehend etwas kleiner als die Umrißform des Sechskantzylinders 155 in Fig. 14 bis Fig. 16. Dadurch ist im Montageendzustand eine verbesserte Vorspannung des Dämpfungskörpers 145 in alle drei Achsenrichtungen möglich.

Es ist auch denkbar, bei dem erfinderischen Feldabstandhalter nur konisch geformte Teilhülsen 126 und dementsprechend konisch geformte Hülsenhohlkanäle 150 oder nur konisch geformte Sechskantzylinder 155 und dementsprechend geformte Aufnahmen 175 zu verwenden.

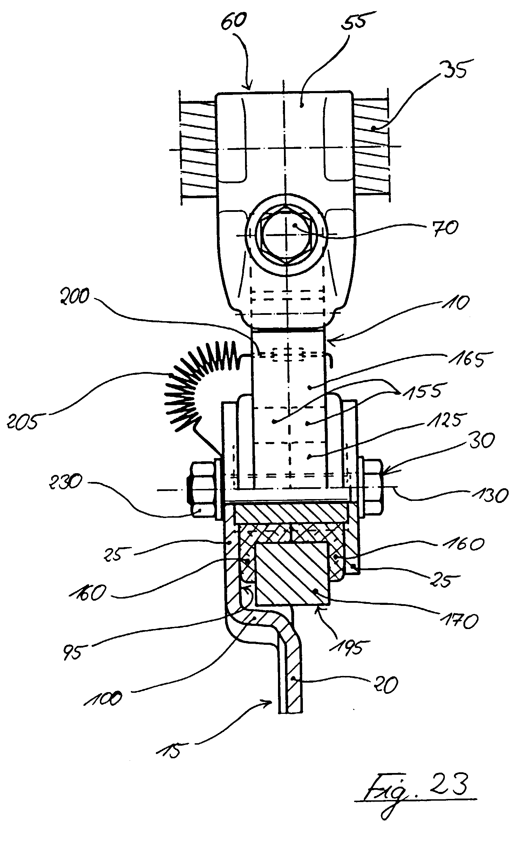

Fig. 19 läßt ein Befestigungsende 165 mit einer weiteren Ausgestaltungsform des Radialvorsprunges 170 erkennen. Die der Zeichnungsebene in Fig. 19 entsprechende Oberfläche des Befestigungsendes 165 ist im Bereich des Radialvorsprunges 170 senkrecht zur Zeichnungsebene abgewinkelt. Die Aufbauhöhe des Radialvorsprunges 170 ist demnach kleiner als die des Befestigungsendes 165. In Fig. 20 ist dies entsprechend dem Schnitt XX-XX in Fig. 19 verdeutlicht. Der Radialvorsprung 170 und der daran angrenzende Bereich des Befestigungsendes 165 weisen dementsprechend die Form eines L auf.
Ein Radialvorsprung 170 gemäß Fig. 10 und Fig. 11 kann bei bestimmten Drehstellungen zweier benachbarter Streben 15 in seiner Begrenzerwirkung behindert werden.

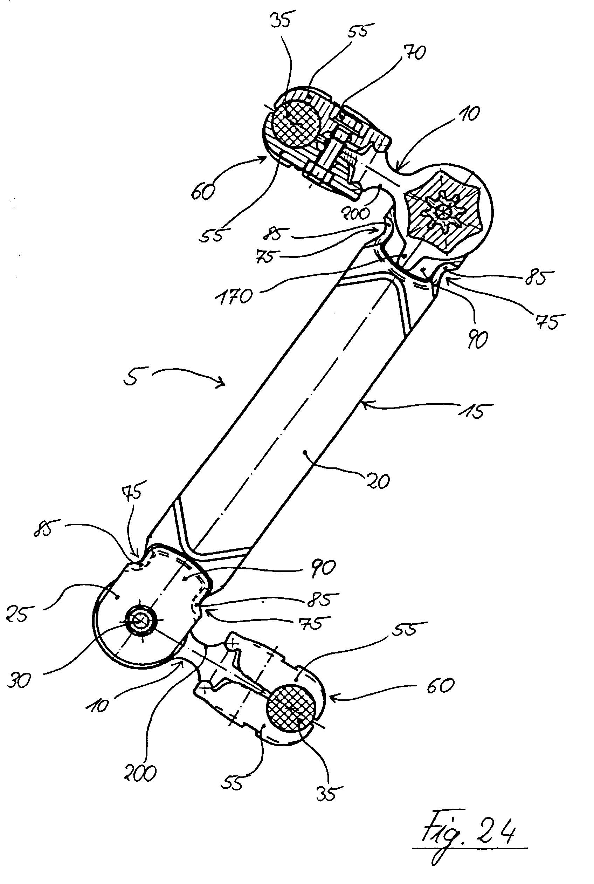

Fig. 21 zeigt eine weitere Variante des Radialvorsprunges 170. Seine Aufbauhöhe entspricht der Aufbauhöhe des Befestigungsendes 165 entsprechend Fig. 11. Der Radialvorsprung 170 enthält jedoch eine sacklochförmige Bohrung 210. Die Öffnung dieser Bohrung 210 ist im Montageendzustand der Innenfläche 95 eines Strebenendes 25 zugewandt. Dies entspricht der Darstellung in Fig. 22 entsprechend dem Schnitt XXII-XXII in Fig. 21. In die sacklochartige Bohrung 210 ist eine elektrisch leitende Druckfeder 215 und ein elektrisch leitender Kontaktstift 220 eingelegt. Der Querschnitt des Kontaktstiftes 220 und der helixförmigen Druckfeder 215 entsprechen derart dem Durchmesser der sacklochartigen Bohrung 210, daß eine formschlüssige Einlage des Kontaktstiftes 220 und der Druckfeder 215 möglich ist. Da der Haltearm 10 Rotationsbewegungen ausführen kann, ist eine ortsfeste Einlage des Kontaktstiftes 220 und der Druckfeder 215 in die Bohrung 210 wichtig. Die Druckfeder 215 druckbeaufschlagt den Kontaktstift 220 und gewährleistet so den elektrischen Kontakt zwischen dem Kontaktende 225 des Kontaktstiftes 220 und der Innen-fläche 95 des Strebenendes 25. Mit dieser Variante des Radialvorsprunges 170 ist ein Potentialausgleich zwischen dem Haltearm 10 und der Strebe 15 ohne Verwendung der Einkerbung 200 und der Kontaktfeder 205 möglich.

Anhand von Fig. 23 wird der Zusammenbau der in den vorhergehenden Figuren besprochenen Teile in ihren Montageendzustand erläutert. Fig. 23 entspricht der Ansicht XXIII in Fig. 2.
Die Halterung des Teilleiters 35 mit Hilfe der Klemmhalterung 60 wurde bereits in Fig. 1 und Fig. 2 beschrieben, ebenso der Anbau der Klemmhalterung 60 an den Haltearm 10.
In die Aufnahme 175 des Befestigungsendes 165 wird von beiden Seiten entlang der Rotationsachse 130 je ein Dämpfungskörper 145 eingesetzt. Die Auflagekragen 160 befinden sich außerhalb der Aufnahme 175 und liegen zwischen dem Befestigungsende 165 und den ihnen zugewandten Innenflächen 95 der Strebenenden 25 ein. In ihrer Ausgangsstellung haben die beiden in die Aufnahme 175 eingesetzten Dämpfungskörper 145 zusammen in Richtung der Rotationsachse 130 eine größere Aufbauhöhe als die Spannhülse 125. In Montageendstellung liegt die Spannhülse 125 jedoch formschlüssig in den Ausnehmungen 115 der Strebenenden 25 ein. Dadurch sind die Auflagekragen 160 in Richtung der Rotationsachse 130 vorgespannt. Dies führt zu besseren Schwingungsdämpfungen der Teilleiter. Die in Rotationsachsenrichtung vorgespannten Auflagekragen 160 lassen außerdem eine Bewegung des Haltearmes in Teilleiterlängsrichtung zu. Somit werden auch in Teilleiterlängsrichtung auftretende Schwingungen gedämpft.
Bestehen die Dämpfungskörper 145 aus elektrisch leitendem Material, so wird der Potentialausgleich zwischen einem Teilleiter 35 und dem Zentralkörper 5 mittels der Kontaktfeder 205 oder des Kontaktstiftes 220 überflüssig. Die Dämpfungskörper 145 können jedoch auch aus elektrisch nicht leitendem Werkstoff hergestellt sein, so kann z.B. der gesamte Dämpfungskörper aus zwei losen Gummiteilen bestehen. Der gesamte Dämpfungskörper kann aber auch einteilig hergestellt sein, also z.B. in das Befestigungsende 165 vor der Montage einvulkanisiert sein. Der Vorteil hierbei ist, daß Spaltkorrosion vermieden wird.
Durch die formschlüssige Einlage der Dämpfungskörper 145 in die Aufnahme 175 kann der Haltearm 10 ohne Vorspannung der Sechskantzylinder 155 in Rotationsrichtung nur insoweit rotieren, wie auch die Dämpfungskörper 145 selbst rotieren. Die ungewollte Rotation der Dämpfungskörper 145 wird von der Spannhülse 125 verhindert. Die Spannhülse 125 wird in die Hülsenhohlkanäle 150 der Dämpfungskörper 145 formschlüssig eingesetzt. Die Ausdehnung der Spannhülse 125 entlang der Rotationsachse 130 überragt die beiden Auflagekragen 160 in Montageendstellung derart, daß jeweils eine Stirnseite der Spannhülse 125 formschlüssig in der Ausnehmung 115 der zugewandten Innenfläche 95 einliegt.
Gegenüber seinem Ausgangszustand ist der Dämpfungskörper 145 in seinem Montageendzustand in Richtung der Rotationsachse 130 zusammengedrückt und dadurch vorgespannt. Die Dämpfungseigenschaften des Dämpfungskörpers 145 werden zusätzlich verbessert, wenn konisch geformte Teilhülsen 126 als Spannhülse 125 und Hülsenhohlkanäle 150 mit zur Spannhülse 125 etwas kleineren Umrißform verwendet werden und/oder konisch geformte Sechskantzylinder 155 und Aufnahmen 175 mit etwas kleinerer Umrißform benutzt werden. Mit solchen nach Fig. 12 bis 18 ausgestalteten Bauteilen läßt sich im Montageendzustand auf einfache Weise eine Vorspannung des Dämpfungskörpers in allen drei Achsenrichtungen erreichen.
Werden Dämpfungskörper 145 mit einem Auflagekragen 160 nach Fig. 15 eingesetzt, ist die Haltbarkeit und Funktionssicherheit des Dämpfungskörpers 145 zusätzlich verbessert und seine Lebensdauer vergrößert.

Die Kröpfungen der Strebenenden 25 berücksichtigen die Längsausdehnung der Spannhülse 125 entlang der Rotationsachse 130.
Wegen ihren Längsrippen 140 hat die Spannhülse 125 die Funktion einer Keilwelle. Die drehfixierte Stellung der Spannhülse 125 wird deshalb auf die Dämpfungskörper 145 übertragen.
Die zusammengesetzten Gelenkteile werden mittels der Befestigungsschraube 30 und der dazugehörigen Schraubenmutter 230 gegeneinander verspannt. Zu diesem Zweck durchsetzt die Befestigungsschraube 30 den Schraubenhohlkanal 135 der Spannhülse 125. Nachdem der Haltearm 10 in die gewünschte Drehstellung gegenüber der Strebe 15 gebracht ist und die zwei benachbarten Strebenenden 25 ebenfalls in ihre gewünschte Drehstellung zueinander gebracht sind, wird die Schraubenmutter 230 fest angezogen. Ohne Einwirkung von äußeren Kräften ist nun keine Änderung der Drehstellung des Haltearmes oder zweier benachbarter Streben 15 gegeneinander möglich. Ist eine Änderung der relativen Drehstellungen des Haltearmes 10 und/oder der Streben 15 erwünscht oder erforderlich, wird die Schraubenmutter 230 gelöst. Berücksichtigt man nur den Querschnitt der Spannhülse 125, so sind Veränderungen der Drehstellungen in Schritten von 45° oder Vielfachen davon möglich. Es ist aber auch eine Änderung der relativen Drehstellung zwischen der Spannhülse 125 und dem Haltearm 10 möglich. Die Ursache hierfür liegt in dem Versatz zwischen dem Querschnitt des Hülsenhohlkanales 150 und dem Querschnitt des Sechskantzylinders 155 sowie in der Anordnung des Versatzwinkels V. Somit sind insgesamt auch kleinere und größere Änderungsschritte als 45° oder deren Vielfache möglich und der Haltearm 10 kann in die verschiedensten Drehstellungen gegenüber der Strebe 15 gebracht werden.

In Fig. 23 wird der Potentialausgleich zwischen dem Haltearm 10 und der Strebe 15 mittels der Kontaktfeder 205 hergestellt. Dazu wird das eine Kontaktfederende in die Einkerbung 200 eingelegt und mit dem Haltearm 10 elektrisch leitend kontaktiert. Das andere Kontaktfederende wird zwischen der Schraubenmutter 230 und dem der Schraubenmutter 230 zugewandten Strebenende 25 eingeklemmt.

Durch die hier beschriebene Aufbauweise der Knotenpunkte des Zentralkörpers 5 werden ungewollte Änderungen der relativen Drehstellungen verhindert. Die Dämpfungskörper 145 sind vorzugsweise aus elastischem Material gefertigt. Dadurch werden auf den Haltearm 10 einwirkende Schwingungen gedämpft. Die gerundeten Kraftangriffsflächen der Sechskantzylinder 155 und der Aufnahme 175 lassen außerdem den bekannten Torx-Kraftangriff zu. Dadurch wird die Dämpfungsfähigkeit des Feldabstandhalters zusätzlich verbessert.
Die Vorspannung des Dämpfungskörpers 145 in seinem Montageendzustand in Richtung der Rotationsachse 130 steigert ebenfalls die Dämpfungsfähigkeit des Feldabstandhalters. Ohne die Materialeigenschaften des Dämpfungskörpers 145 zusätzlich zu beanspruchen, ist sein Wirkbereich und damit auch seine Funktionssicherheit und Lebensdauer vergrößert.

Der Radialvorsprung 170 wirkt als Drehbegrenzer. Er ragt in seinem Montageendzustand in die Aufnahmemulde 90 hinein und schlägt bei extremer ungewollter Änderung der relativen Drehstellung des Haltearmes 10 mit einer Anschlagwand 190 an einer Seitenwand 85 der Aufnahmemulde 90 an.

Die Streben 15 wie auch die Haltearme 10 können aus einer schmied- und vergütbaren Aluminiumlegierung bestehen, die sehr duktil verformbar ist. Dies ist z.B. wichtig für die Ausgestaltung der Aufnahmemulden 90. Die Aluminiumlegierung weist in ihrem Endzustand die erforderliche Festigkeit auf und hat zudem den Vorteil eines geringen Gewichtes.
Die Streben 15 und die Haltearme 10 können jedoch auch gußtechnisch oder schmiedetechnisch aus Stahl hergestellt sein.

Fig. 24 läßt einen Zentralkörper 5, bestehend aus nur einer einzigen Strebe 15, erkennen. Dieser Zentralkörper 5 ist für einen Bündelleiter mit zwei etwa lotrecht zum Erdboden angeordneten Teilleiterquerschnitten geeignet. In diesem Fall liegt nur an einem Auflagekragen 160 die Innenfläche 95 eines Strebenendes 25 an. Der jeweils andere Auflagekragen 160 liegt an der ihm zugewandten Stirnfläche der in Fig. 24 nicht dargestellten Kreisscheibe 31 an. Die Ausgestaltung, Anordnung und Funktionsweise der in Fig. 24 dargestellten Teile entspricht der Beschreibung in den Fig. 1 bis 23.
Bei den in Fig. 1 und in Fig. 24 dargestellten Feldabstandhaltern ist eine Abdeckung sämtlicher Auflagekragen 160 der Dämpfungskörper 145 nur durch Strebenenden 25 nicht möglich. Ohne eine beidseitige Abdeckung ist jedoch keine Vorspannung des Dämpfungskörpers 145 in Richtung der Rotationsachse 130 möglich. Die Funktion des zweiten, in Fig. 1 und Fig. 24 nicht vorhandenen Strebenendes 25 im Bereich eines Haltearmes 10 übernimmt die kreisrunde Scheibe 31. Deren Außendurchmesser entspricht etwa dem Umrißdurchmesser des Auflagekragens 160, so daß dieser vor mechanischen Beschädigungen zusätzlich geschützt ist. Auf der dem Auflagekragen 160 zugewandten Oberfläche ist im zentralen Bereich der Scheibe 31 eine Ausnehmung entsprechend der Ausnehmung 115 des Strebenendes 25 eingeformt. Die Befestigungsschraube 30 durchsetzt die Scheibe 31 entsprechend dem Strebenende 25. Mit Hilfe der Befestigungsschraube 30 und der Schraubenmutter 230 ist der Dämpfungskörper 145 in gleicher Weise wie bei der Verwendung zweier benachbarter Strebenenden 25 im Montageendzustand vorgespannt.

### Bezugszeichenliste

- 5: Zentralkörper
- 10: Haltearm
- 15: Strebe
- 20: Mittelkörper
- 25: Strebenende
- 30: Befestigungsschraube
- 31: Scheibe
- 35: Teilleiter
- 40: Halteende
- 45: Zunge
- 46: Zungenbohrung
- 49: Ausnehmung
- 50: Wulst
- 55: Klemmbacke
- 60: Klemmhalterung
- 65: elastischer Ring
- 70: Klemmschraube
- 75: Biegebereich
- 80: Längsachse
- 85: Seitenwand
- 90: Aufnahmemulde
- 95: Innenfläche
- 100: Muldenwand
- 105: Bügel
- 110: Lagerbohrung
- 115: Ausnehmung
- 125: Spannhülse
- 126: Teilhülse
- 127: Absatz
- 130: Rotationsachse
- 135: Schraubenhohlkanal
- 140: Längsrippen
- 145: Dämpfungskörper
- 150: Hülsenhohlkanal
- 155: Sechskantzylinder
- 160: Auflagekragen
- 165: Befestigungsende
- 170: Radialvorsprung
- 175: Aufnahme
- 180: Aufnahmesymmetrieachse
- 185: Armsymmetrieachse
- 190: Anschlagwand
- 195: Nasenvorderwand
- 200: Einkerbung
- 205: Kontaktfeder
- 210: Bohrung
- 215: Druckfeder
- 220: Kontaktstift
- 225: Kontaktende
- 230: Schraubenmutter

- V: Versatzwinkel
- W: Winkel

## Patentansprüche

1. Selbstdämpfender Feldabstandhalter für Bündelleiter mit
- einem starren, an Bündelleiter mit unterschliedlicher Anzahl von Teilleitern (35) anpaßbaren Zentralkörper (5) und
- vom Zentralkörper (5) abstehenden Haltearmen (10) für die einzelnen Teilleiter (35)
dadurch gekennzeichnet,
daß der Zentralkörper (5) als kinematische Kette ausgebildet ist mit Streben (15) gleicher Bauart als Glieder, wobei die Beweglichkeit der Glieder (15) gegeneinander aufhebbar ist.

2. Selbstdämpfender Feldabstandhalter nach Anspruch 1,
dadurch gekennzeichnet,
daß der Zentralkörper (5) eine offene kinematische Kette ist.

3. Selbstdämpfender Feldabstandhalter nach Anspruch 2,
dadurch gekennzeichnet,
daß die offene kinematische Kette aus zwei Streben (15) gebildet ist.

4. Selbstdämpfender Feldabstandhalter nach Anspruch 1,
dadurch gekennzeichnet,
daß der Zentralkörper (5) eine übergeschlossene kinematische Kette ist.

5. Selbstdämpfender Feldabstandhalter nach Anspruch 1,
dadurch gekennzeichnet,
daß der Zentralkörper (5) eine zwangläufig geschlossene kinematische Kette ist.

6. Selbstdämpfender Feldabstandhalter nach Anspruch 1,
dadurch gekennzeichnet,
daß der Zentralkörper (5) eine zwanglos geschlossene kinematische Kette ist.

7. Selbstdämpfender Feldabstandhalter nach einem oder mehreren der vorhergehenden Ansprüche,
dadurch gekennzeichnet,
daß einander benachbarte Streben (15) mit ihren Strebenenden (25) gelenkig miteinander verbunden sind.

8. Selbstdämpfender Feldabstandhalter nach Anspruch 7,
dadurch gekennzeichnet,
daß die Strebenenden (25) von einer Lagerbohrung (110) durchsetzt sind.

9. Selbstdämpfender Feldabstandhalter nach Anspruch 8,
dadurch gekennzeichnet,
daß ein Gelenkbolzen die Lagerbohrungen (110) zweier miteinander verbundender Strebenenden (25) durchsetzt zur Ausbildung eines Achsengelenkes.

10. Selbstdämpfender Feldabstandhalter nach Anspruch 9,
dadurch gekennzeichnet,
daß der Gelenkbolzen aus einer Befestigungsschraube (30) und einer hohlzylindrischen Spannhülse (125) besteht, wobei die Befestigungsschraube (30) die Spannhülse (125) und die Lagerbohrungen (110) im Montageendzustand durchsetzt und die Spannhülse (125) mit ihren Stirnseiten an den einander zugewandten Innenflächen (95) der Strebenenden (25) anliegt.

11. Selbstdämpfender Feldabstandhalter nach einem oder mehreren der vorhergehenden Ansprüche,
dadurch gekennzeichnet,
daß die Lagerbohrungen (110) an den Innenflächen (95) der Strebenenden (25) kranzartig von Ausnehmungen (115) zur Zentrierung der Spannhülsen (125) umgeben sind.

12. Selbstdämpfender Feldabstandhalter nach einem oder mehreren der vorhergehenden Ansprüche,
dadurch gekennzeichnet,
- daß die Spannhülse (125) nach Art einer Keilwelle auf ihrer Mantelfläche eine Längsrippe (140) trägt und
- daß die Ausnehmung (115) eine der Querschnittsform der Längsrippe (140) entsprechende Ausbuchtung enthält zur Bildung eines Formschlusses.

13. Selbstdämpfender Feldabstandhalter nach Anspruch 12,
dadurch gekennzeichnet,
daß die in den Ausbuchtungen der Ausnehmungen (115) zweier miteinander verbundener Streben (15) einliegende Längsrippe (140) eine Drehfixierung für die Streben (15) ist.

14. Selbstdämpfender Feldabstandhalter nach einem oder mehreren der vorhergehenden Ansprüche,
dadurch gekennzeichnet,
daß die Spannhülse (125) auf ihrer Mantelfläche eine Vielzahl von Längsrippen (140) trägt derart, daß sie einen sternförmigen Querschnitt aufweist.

15. Selbstdämpfender Feldabstandhalter nach einem oder mehreren der vorhergehenden Ansprüche,
dadurch gekennzeichnet,
daß die Befestigungsschraube (30) die verbundenen Strebenenden (25) miteinander kraftschlüssig verspannt und die Spannhülse (125) mit ihren Stirnseiten formschlüssig in den Ausnehmungen (115) einliegt zur Aufhebung der Beweglichkeit der Streben (15) gegeneinander.

16. Selbstdämpfender Feldabstandhalter nach einem oder mehreren der vorhergehenden Ansprüche,
dadurch gekennzeichnet,
daß die Streben (15) aus den Strebenenden (25) und einem die Strebenenden (25) verbindenden Mittelkörper (20) bestehen.

17. Selbstdämpfender Feldabstandhalter nach Anspruch 16,
dadurch gekennzeichnet,
daß die Strebenenden (25) gegenüber dem Mittelkörper (20) gekröpft sind.

18. Selbstdämpfender Feldabstandhalter nach Anspruch 17,
dadurch gekennzeichnet,
daß die Strebenenden (25) in entgegengesetzten Richtungen gekröpft sind.

19. Selbstdämpfender Feldabstandhalter nach Anspruch 17 oder 18,
dadurch gekennzeichnet,
daß die Schmalseiten der Streben (15) im Bereich der Kröpfungen zur Bildung von Aufnahmemulden (90) umgebogen sind.

20. Selbstdämpfender Feldabstandhalter nach einem oder mehreren der vorhergehenden Ansprüche,
dadurch gekennzeichnet,
daß die Mittelkörper (20) der ansonsten baugleichen Streben (15) unterschiedlich lang sind.

21. Selbstdämpfender Feldabstandhalter nach einem oder mehreren der vorhergehenden Ansprüche,
dadurch gekennzeichnet,
daß Haltearme (10) an den Strebenenden (25) fixierbar sind.

22. Selbstdämpfender Feldabstandhalter nach Anspruch 21,
dadurch gekennzeichnet,
daß die Haltearme (10) am Gelenkbolzen befestigt sind.

23. Selbstdämpfender Feldabstandhalter nach Anspruch 22,
dadurch gekennzeichnet,
daß die Haltearme (10) mit ihrem Befestigungsende (165) mit der Spannhülse (125) verbunden sind und an ihrem dem Befestigungsende (165) abgewandten Halteende (40) eine Klemmhalterung (60) für einen Teilleiter (35) angebracht ist.

24. Selbstdämpfender Feldabstandhalter nach Anspruch 23,
dadurch gekennzeichnet,
- daß das Halteende (40) eine durchbohrte Zunge (45) enthält und
- daß zwei den Teilleiter (35) halternde Klemmbacken (55) mittels einer die Zunge (45) durchsetzenden, die Klemmbacken (55) und die Zunge (45) verbindenden Klemmschraube (70) gegeneinander verspannbar sind.

25. Selbstdämpfender Feldabstandhalter nach Anspruch 23,
gekennzeichnet durch
eine Verbindung von Haltearm (10) und Spannhülse (125) mittels eines Dämpfungskörpers (145).

26. Selbstdämpfender Feldabstandhalter nach Anspruch 25,
dadurch gekennzeichnet,
daß der Dämpfungskörper (145) in Richtung seiner Rotationsachse (130) von einem Hülsenhohlkanal (150) durchbrochen ist, wobei die Spannhülse (125) in den Hülsenhohlkanal (150) einbringbar ist.

27. Selbstdämpfender Feldabstandhalter nach Anspruch 26,
dadurch gekennzeichnet,
daß der Dämpfungskörper (145) im Ausgangszustand die Spannhülse (125) in Richtung der Rotationsachse (130) übersteht.

28. Selbstdämpfender Feldabstandhalter nach Anspruch 26,
dadurch gekennzeichnet,
daß die Hohlquerschnittsform des Hülsenhohlkanals (150) der Volumenquerschnittsform der Spannhülse (125) entspricht derart, daß der Hülsenhohlkanal (150) die Spannhülse (125) im Montageendzustand formschlüssig umfaßt.

29. Selbstdämpfender Feldabstandhalter nach Anspruch 27,
dadurch gekennzeichnet,
daß die Spannhülse (125) aus zwei symmetrischen Teilhülsen (126) mit in Richtung der Rotationsachse (130) konischem Verlauf besteht.

30. Selbstdämpfender Feldabstandhalter nach Anspruch 29,
dadurch gekennzeichnet,
daß die im Montageendzustand aneinander anliegenden Stirnseiten beider Teilhülsen (126) den geringsten Umrißdurchmesser der Spannhülse (125) aufweisen.

31. Selbstdämpfender Feldabstandhalter nach einem oder mehreren der vorhergehenden Ansprüche,
dadurch gekennzeichnet,
daß das Befestigungsende (165) des Haltearmes (10) eine Aufnahme (175) für den Dämpfungskörper (145) aufweist.

32. Selbstdämpfender Feldabstandhalter nach Anspruch 31,
dadurch gekennzeichnet,
daß die Aufnahme (175) für den Dämpfungskörper (145) einen Innensechskant und der Dämpfungskörper (145) eine dementsprechende sechskantförmige Umrißgestalt (155) aufweist zur Bildung einer formschlüssigen Verbindung.

33. Selbstdämpfender Feldabstandhalter nach Anspruch 32,
gekennzeichnet durch
abgerundete Kraftangriffsflächen am aufnahmeseitigen Innensechskant (175) und am dämpfungskörperseitigen Außensechskant (155) zur Ausbildung eines Torx-Kraftangriffs.

34. Selbstdämpfender Feldabstandhalter nach einem oder mehreren der vorhergehenden Ansprüche,
dadurch gekennzeichnet,
- daß der Dämpfungskörper (145) die Aufnahme (175) beidseitig in Richtung seiner Rotationsachse (130) übersteht,
- daß dieser Überstand als flanschartiger Auflagekragen (160) ausgebildet ist und
- daß der Auflagekragen (160) im Montageendzustand zwischen einer Innenfläche (95) eines Strebenendes (25) und dem Befestigungsende (165) des Haltearmes (10) einliegt.

35. Selbstdämpfender Feldabstandhalter nach Anspruch 34,
dadurch gekennzeichnet,
daß der Auflagekragen (160) im Bereich seiner Ränder gegenüber dem hülsenhohlkanalnahen Bereich in Richtung der Rotationsachse (130) abgeflacht ist.

36. Selbstdämpfender Feldabstandhalter nach einem oder mehreren der vorhergehenden Ansprüche,
dadurch gekennzeichnet,
- daß der Dämpfungskörper aus zwei symmetrischen Teilkörpern (145) besteht mit jeweils einem Überstand (160) und
- daß im Montageendzustand die beiden Teilkörper (145) beidseitig in die Aufnahme (175) eingeschoben sind.

37. Selbstdämpfender Feldabstandhalter nach Anspruch 36,
dadurch gekennzeichnet,
daß der Außensechskant (155) des Teilkörpers (145) in Richtung der Rotationsachse (130) konisch verläuft.

38. Selbstdämpfender Feldabstandhalter nach den Ansprüchen 36 und 37,
dadurch gekennzeichnet,
daß die im Montageendzustand aneinander anliegenden Stirnseiten beider Außensechskante (155) den geringsten Umrißdurchmesser des Dämpfungskörpers (145) aufweisen.

39. Selbstdämpfender Feldabstandhalter nach einem oder mehreren der vorhergehenden Ansprüche,
dadurch gekennzeichnet,
daß der Dämpfungskörper (145) in die Aufnahme (175) einvulkanisierbar ist.

40. Selbstdämpfender Feldabstandhalter nach einem oder mehreren der vorhergehenden Ansprüche,
dadurch gekennzeichnet,
daß der Dämpfungskörper (145) aus elektrisch leitendem Werkstoff besteht.

41. Selbstdämpfender Feldabstandhalter nach einem oder mehreren der vorhergehenden Ansprüche,
dadurch gekennzeichnet,
- daß der Dämpfungskörper aus elektrisch nicht leitendem Werkstoff besteht,
- daß eine Kontaktfeder (205) mit einem Federende am Haltearm (10) fixiert ist und mit ihrem anderen Federende mit der Strebe (15) verbunden ist und
- daß die Kontaktfeder (205) zum Potentialausgleich den Haltearm (10) und die Strebe (15) elektrisch leitend kontaktiert und miteinander verbindet.

42. Selbstdämpfender Feldabstandhalter nach einem oder mehreren der vorhergehenden Ansprüche,
dadurch gekennzeichnet,
daß an das Befestigungsende (165) des Haltearmes (10) ein im Montageendzustand in die Aufnahmemulden (90) hineinragender Radialvorsprung (170) angeformt ist und als Drehbegrenzungsanschlag wirksam ist.

43. Selbstdämpfender Feldabstandhalter nach einem oder mehreren der vorhergehenden Ansprüche,
gekennzeichnet durch
mehrere über den Umfang des Befestigungsendes (165) verteilt angeordnete Radialvorsprünge (170).

44. Selbstdämpfender Feldabstandhalter nach einem oder mehreren der vorhergehenden Ansprüche,
gekennzeichnet durch
einen federdruckbeaufschlagten Kontaktstift (220) in einem Radialvorsprung (170), wobei der Kontaktstift (220) mit seinem Kontaktende (225) an der Innenfläche (95) des Strebenendes (25) anliegt zur elektrisch leitenden Verbindung von Haltearm (10) und Strebe (15).

45. Selbstdämpfender Feldabstandhalter für Bündelleiter mit zwei Teilleitern (35) und mit einer Strebe (15) als Zentralkörper (5) nach einem oder mehreren der vorhergehenden Ansprüche,
dadurch gekennzeichnet,
daß an beiden Strebenenden (25) jeweils ein Haltearm (10) angebracht ist.

46. Selbstdämpfender Feldabstandhalter nach einem oder mehreren der vorhergehenden Ansprüche,
dadurch gekennzeichnet,
daß die Strebe (15) ein aus einem Blechzuschnitt oder aus einem Flachband gestanztes und gebogenes einstückiges Bauteil ist und aus einer Aluminiumlegierung oder aus Stahl besteht.

## Claims

1. A damping spacer for bundle conductors with
- a rigid central body (5) adaptable to bundle conductors with a variable number of subconductors (35) and
- holding arms (10), projecting from the central body (5), for the individual subconductors (35),
characterized in that
the central body (5) is formed as a kinematic chain with struts (15) of the same design as the links, wherein the movability of the links (15) can be eliminated with respect to one another.

2. A damping spacer according to claim 1,
characterized in that
central body (5) is an open kinematic chain.

3. A damping spacer according to claim 2,
characterized in that
the open kinematic chain is formed by two struts (15).

4. A damping spacer according to claim 1,
characterized in that
the central body (5) is a kinematic chain with redundant constraints.

5. A damping spacer according to claim 1,
characterized in that
the central body (5) is a constrained closed kinematic chain.

6. A damping spacer according to claim 1,
characterized in that
the central body (5) is an unconstrained closed kinematic chain.

7. A damping spacer according to one or more of the preceding claims,
characterized in that
struts (15) adjoining one another are articulated to one another at their strut ends (25).

8. A damping spacer according to claim 7,
characterized in that
the strut ends (25) are traversed by a bearing bore (110).

9. A damping spacer according to claim 8,
characterized in that
a hinge pin passes through the bearing bores (110) of two strut ends (25) joined to each other so as to form a pin joint.

10. A damping spacer according to claim 9,
characterized in that
the hinge pin consists of a fastening screw (30) and a hollow cylindrical clamping sleeve (125), in which arrangement the fastening screw (30) passes through the clamping sleeve (125) and the bearing bores (110) in the final assembled state, and the clamping sleeve (125) bears with its end faces on the inner surfaces (95) of the strut ends (25), facing one another.

11. A damping spacer according to one or more of the preceding claims,
characterized in that
at the inner surfaces (85) of the strut ends (25), the bearing bores (110) are surrounded in the manner of wreaths by recesses (115) for the centring of the clamping sleeve (125).

12. A damping spacer according to one or more of the preceding claims,
characterized in that
- the clamping sleeve (125) carries a longitudinal rib (140) on its lateral surface in the manner of a splined shaft and
- that the recess (115) comprises a salient corresponding to the cross-sectional shape of the longitudinal rib (140) so as to form a form fit.

13. A damping spacer according to claim 12,
characterized in that
the longitudinal rib (140) lying in the salients of the recesses (115) of two struts (15) connected to one another is a means for preventing rotation of the struts (15).

14. A damping spacer according to one or more of the preceding claims,
characterized in that
the clamping sleeve (125) carries on its lateral surface a plurality of longitudinal ribs (140), in such a way that it has a star-shaped cross-section.

15. A damping spacer according to one or more of the preceding claims,
characterized in that
the fastening screw (30) clamps the joined strut ends (25) together with a force fit and that the clamping sleeve (125) lies with its end faces with a form fit in the recesses (115) so as to eliminate the movability of the struts (15) with respect to one another.

16. A damping spacer according to one or more of the preceding claims,
characterized in that
the struts (15) consist of the strut ends (25) and a central body (20) connecting the strut ends (25).

17. A damping spacer according to claim 18,
characterized in that
the strut ends (25) are offset with respect to the central body (20).

18. A damping spacer according to claim 17,
characterized in that
the strut ends (25) are offset in opposite directions.

19. A damping spacer according to claim 17 or 18,
characterized in that
the narrow sides of the struts (15) are bent in the zone of the offsets to form receiving troughs (80).

20. A damping spacer according to one or more of the preceding claims,
characterized in that
the central bodies (20) of the struts (15), otherwise having the same design, differ in length.

21. A damping spacer according to one or more of the preceding claims,
characterized in that
holding arms (10) can be fixed on the strut ends (25).

22. A damping spacer according to claim 21,
characterized in that
the holding arms (10) are secured on the hinge pin.

23. A damping spacer according to claim 22,
characterized in that
the holding arms (10) are connected at their fastening end (165) to the clamping sleeve (125) and that at their holding end (40) remote from the fastening end (165), there is attached a clamp mounting (60) for a subconductor (35).

24. A damping spacer according to claim 23,
characterized in that
- the holding end (40) comprises a perforated tongue (45) and
- that two clamping jaws (55) holding the subconductor (35 in position can be clamped against each other by means of a clamping screw (70) passing through the tongue (45) and connecting the clamping jaws (55) and the tongue (45).

25. A damping spacer according to claim 23,
characterized by
a connection of the holding arm (10) and clamping sleeve (125) by means of a damping body (145).

26. A damping spacer according to claim 25,
characterized in that
the damping body (145) is traversed in the direction of its axis of rotation (130) by a hollow socket duct (150), in which arrangement the clamping sleeve (125) can be introduced into the hollow socket duct (150).

27. A damping spacer according to claim 26,
characterized in that
in the initial state, the damping body (145) projects over the clamping sleeve (125) in the direction of the axis of rotation (130).

28. A damping spacer according to claim 26,
characterized in that
the hollow cross-sectional shape of the hollow socket duct (150) corresponds to the volumic cross-sectional shape of the clamping sleeve (125) in such a way that in the final assembled state, the hollow socket duct (150) surrounds the clamping sleeve (125) with a form fit.

29. A damping spacer according to claim 27,
characterized in that
the clamping sleeve (125) consists of two symmetrical part sleeves (126) with a conical shape in the direction of the axis of rotation (130).

30. A damping spacer according to claim 29,
characterized in that
the end faces of both part sleeves (128) bearing in the final assembled state on one another have the smallest contour diameter of the clamping sleeve (125).

31. A damping spacer according to one or more of the preceding claims,
characterized in that
the fastening end (165) of the holding arm (10) has a receiving means for the damping body (145).

32. A damping spacer according to claim 31,
characterized in that
the receiving means (175) for the damping body (145) has a hexagonal socket, and the damping body (145) a corresponding hexagonal contour shape (155) so as to form a connection with a form fit.

33. A damping spacer according to claim 32,
characterized by
rounded force application surfaces on the flexigonal socket (175) on the receiving side, and on the male hexagonal fitting (155) on the side of the damping body, so as to form a Torx-type force application.

34. A damping spacer according to one or more of the preceding claims,
characterized in that
- the damping body (145) projects over the receiving means (175) on both sides in the direction of its axis of rotation (130),
- that this projection is formed as a flange-type bearing collar (160) and
- that in the final assembled state, the bearing collar (180) lies between an internal surface (95) of one strut end (25) and the fastening end (165) of the holding arm (10).

35. A damping spacer according to claim 34,
characterized in that
in the zone of its edges opposite the zone near the hollow sleeve duct, the bearing collar (180) is flattened in the direction of the axis of rotation (130).

36. A damping spacer according to one or more of the preceding claims,
characterized in that
- the damping body consists of two symmetrical part bodies (145) with one projecting portion (160) each and
- that in the final assembled state, the two part bodies (145) are inserted on both sides into the receiving means (175).

37. A damping spacer according to claim 36,
characterized in that
the male hexagonal fitting (155) of the part body (145) has a conical shape in the direction of the axis of rotation (130).

38. A damping spacer according to claims 36 and 37,
characterized in that
the end faces of both outer hexagonal fittings (155) bearing in the final assembled state on one another have the smallest contour diameter of the damping body (145).

39. A damping spacer according to one or more of the preceding claims,
characterized in that
the damping body (145) can be fitted in the receiving means (175) by vulcanization.

40. A damping spacer according to one or more of the preceding claims,
characterized in that
the damping body (145) consists of an electrically conductive material.

41. A damping spacer according to one or more of the preceding claims,
characterized in that
- the damping body consists of an electrically nonconductive material,
- that a contact spring (205) is fixed on the holding arm (10) at one spring end and is connected to the strut (15) at its other spring end, and
- that the contact spring (205) is in an electrically conductive contact with the holding arm (10) and the strut (15), and connects them to one another for equalizing the potential.

42. A damping spacer according to one or more of the preceding claims,
characterized in that
on the fastening end (165) of the holding arm (10), there is formed a radial projection (170) projecting in the final assembled state into the receiving troughs (90) and acting as a stop for limiting the rotation.

43. A damping spacer according to one or more of the preceding claims.
characterized by
one or more radial projections (170) arranged to be distributed over the circumference of the fastening end (165).

44. A damping spacer according to one or more of the preceding claims,
characterized by
a spring-loaded contact pin (220) in a radial projection (170), in which arrangement the contact pin (220) bears with its contact end (225) on the inner surface (95) of the strut end (25) for the purpose of an electrically conductive connection of the holding arm (10) and strut (15).

45. A damping spacer for bundle conductors with two subconductors (35) and with a strut (15) as the central body (5) according to one or more of the preceding claims,
characterized in that
one holding arm (10) each is mounted on both strut ends (25).

46. A damping spacer according to one or more of the preceding claims,
characterized in that
the strut (15) is a single component stamped and bent out of a sheet metal blank or a flat strip, and that it consists of an aluminium alloy or of steel.

## Revendications

1. Entretoise à auto-amortissement pour des conducteurs en faisceau, comportant :
- un corps central rigide (5) susceptible d'être adapté à des conducteurs en faisceau présentant un nombre différent de conducteurs partiels (35), et
- des bras de retenue (10), faisant saillie du corps central (5), pour les conducteurs partiels individuels (35),
caractérisée en ce que le corps central (5) est réalisé sous forme d'une chaîne cinématique comprenant en tant que maillons des goussets (15) de même mode de construction, dans laquelle la mobilité des maillons (15) les uns par rapport aux autres peut être annulée.

2. Entretoise à auto-amortissement selon la revendication 1, caractérisée en ce que le corps central (5) est une chaîne cinématique ouverte.

3. Entretoise à auto-amortissement selon la revendication 1, caractérisée en ce que la chaîne cinématique ouverte est formée par deux goussets (15).

4. Entretoise à auto-amortissement selon la revendication 1, caractérisée en ce que le corps central (5) est une chaîne cinématique refermée par le dessus.

5. Entretoise à auto-amortissement selon la revendication 1, caractérisée en ce que le corps central (5) est une chaîne cinématique fermée à force.

6. Entretoise à auto-amortissement selon la revendication 1, caractérisée en ce que le corps central (5) est une chaîne cinématique fermée sans force.

7. Entretoise à auto-amortissement selon l'une quelconque des revendications précédentes, caractérisée en ce que des goussets voisins (15) sont reliés les uns aux autres avec articulation par leurs extrémités (25).

8. Entretoise à auto-amortissement selon la revendication 7, caractérisée en ce que les extrémités (25) des goussets sont traversées par un perçage de montage (110).

9. Entretoise à auto-amortissement selon la revendication 8, caractérisée en ce qu'un goujon d'articulation traverse les perçages de montage (110) de deux extrémités de gousset (25) reliées l'une à l'autre, pour réaliser une articulation d'axe.

10. Entretoise à auto-amortissement selon la revendication 9, caractérisée en ce que le goujon d'articulation est constitué par une vis de fixation (30) et par une douille de serrage cylindrique creuse (125), ladite vis de fixation (30) traversant la douille de serrage (125) et les perçages de montage (110) à l'état de montage final, et ladite douille de serrage (125) s'appuyant par ses faces frontales contre les surfaces intérieures (95) orientées l'une vers l'autre des extrémités de gousset (25).

11. Entretoise à auto-amortissement selon l'une ou plusieurs des revendications précédentes, caractérisée en ce que les perçages de montage (110) sur les surfaces intérieures (95) des extrémités de gousset (25) sont entourés en forme de couronne par des évidements (115) pour centrer les douilles de serrage (125).

12. Entretoise à auto-amortissement selon l'une ou plusieurs des revendications précédentes, caractérisée en ce que :
- la douille de serrage (125) porte à la manière d'un arbre à coin une nervure longitudinale (140) sur sa surface enveloppe, et
- l'évidement (115) comprend un creux correspondant à la forme de section transversale de la nervure longitudinale (140), pour réaliser une coopération de formes.

13. Entretoise à auto-amortissement selon la revendication 12, caractérisée en ce que la nervure longitudinale (140) engagée dans les creux des évidements (115) de deux goussets (15) reliés l'un à l'autre est une fixation en rotation pour les goussets (15).

14. Entretoise à auto-amortissement selon l'une ou plusieurs des revendications précédentes, caractérisée en ce que la douille de serrage (125) porte sur sa surface enveloppe une multitude de nervures longitudinales (140), de sorte qu'elle présente une section transversale en forme d'étoile.

15. Entretoise à auto-amortissement selon l'une ou plusieurs des revendications précédentes, caractérisée en ce que la vis de fixation (30) serre en coopération de forces les extrémités de gousset reliées (25), et en ce que la douille de serrage (125) repose par ses faces frontales en coopération de formes dans les évidements (115), pour annuler la mobilité des goussets (15) l'un par rapport à l'autre.

16. Entretoise à auto-amortissement selon l'une ou plusieurs des revendications précédentes, caractérisée en ce que les goussets (15) sont constitués par les extrémités de gousset (25) et par un corps médian (20) reliant les extrémités de gousset (25).

17. Entretoise à auto-amortissement selon la revendication 16, caractérisée en ce que les extrémités de gousset (25) sont coudées par rapport au corps médian (20).

18. Entretoise à auto-amortissement selon la revendication 17, caractérisée en ce que les extrémités de gousset (25) sont coudées en sens opposés.

19. Entretoise à auto-amortissement selon l'une ou l'autre des revendications 17 et 18, caractérisée en ce que les petits côtés des goussets (15) sont repliés dans la région des coudages pour former des cavités de réception (90).

20. Entretoise à auto-amortissement selon l'une ou plusieurs des revendications précédentes, caractérisée en ce que les corps médians (20) des goussets (15), présentant par ailleurs la même structure, ont différentes longueurs.

21. Entretoise à auto-amortissement selon l'une ou plusieurs des revendications précédentes, caractérisée en ce que les bras de retenue (10) peuvent être fixés aux extrémités de gousset (25).

22. Entretoise à auto-amortissement selon la revendication 21, caractérisée en ce que les bras de retenue (10) sont fixés sur le goujon d'articulation.

23. Entretoise à auto-amortissement selon la revendication 22, caractérisée en ce que les bras de retenue (10) sont reliés par leur extrémité de fixation (165) à la douille de serrage (125), et en ce qu'une monture de pincement (60) pour un conducteur partiel (35) est agencée à leur extrémité de retenue (40) détournée de l'extrémité de fixation (165).

24. Entretoise à auto-amortissement selon la revendication 23, caractérisée en ce que :
- l'extrémité de retenue (40) comporte une languette perforée (45), et
- deux mâchoires de pincement (55) retenant le conducteur partiel (35) peuvent être serrées l'une contre l'autre au moyen d'une vis de pincement (70) qui traverse la languette (45) et qui relie les mâchoires de pincement (55) et la languette (45).

25. Entretoise à auto-amortissement selon la revendication 23, caractérisée par une liaison du bras de retenue (10) et de la douille de serrage (125) au moyen d'un corps d'amortissement (145).

26. Entretoise à auto-amortissement selon la revendication 25, caractérisée en ce que le corps d'amortissement (145) est interrompu en direction de son axe de rotation (130) par un canal creux de douille (150), la douille de serrage (125) pouvant être introduite dans le canal creux de douille (150).

27. Entretoise à auto-amortissement selon la revendication 26, caractérisée en ce que le corps d'amortissement (145) dépasse à l'état de départ au-delà de la douille de serrage (125) en direction de l'axe de rotation (130).

28. Entretoise à auto-amortissement selon la revendication 26, caractérisée en ce que la forme de section transversale creuse du canal creux de douille (150) correspond à la forme de section transversale en volume de la douille de serrage (125), de telle sorte que le canal creux de douille (150) entoure en coopération de formes la douille de serrage (125) à l'état de montage final.

29. Entretoise à auto-amortissement selon la revendication 27, caractérisée en ce que la douille de serrage (125) est constituée par deux douilles partielles symétriques (126) avec un tracé conique en direction de l'axe de rotation (130).

30. Entretoise à auto-amortissement selon la revendication 29, caractérisée en ce que les faces frontales s'appuyant l'une contre l'autre à l'état de montage final des deux douilles partielles (126) présentent le plus petit diamètre de contour de la douille de serrage (125).

31. Entretoise à auto-amortissement selon l'une ou plusieurs des revendications précédentes, caractérisée en ce que l'extrémité de fixation (165) du bras de retenue (10) présente une réception (175) pour le corps d'amortissement (145).

32. Entretoise à auto-amortissement selon la revendication 31, caractérisée en ce que la réception (175) pour le corps d'amortissement (145) présente un six pans creux, et en ce que le corps d'amortissement (145) présente un relief de contour à six pans correspondant (155), pour former une liaison en coopération de formes.

33. Entretoise à auto-amortissement selon la revendication 32, caractérisée par des surfaces d'attaque de force arrondies sur le six-pans creux côté réception (175) et sur le six-pans en relief côté corps d'amortissement (155), pour réaliser une attaque de force du genre "torx".

34. Entretoise à auto-amortissement selon l'une ou plusieurs des revendications précédentes, caractérisée en ce que :
- le corps d'amortissement (145) dépasse au-delà de la réception (175) des deux côtés en direction de son axe de rotation (130),
- cette partie dépassante est réalisée sous forme d'une collerette d'appui (160) en forme de bride,
- la collerette d'appui (160) repose à l'état de montage final entre une surface intérieure (95) d'une extrémité de gousset (25) et l'extrémité de fixation (165) du bras de retenue (10).

35. Entretoise à auto-amortissement selon la revendication 34, caractérisée en ce que la collerette d'appui (160) est aplatie dans la région de ses bordures par rapport à la région côté canal creux de douille en direction de l'axe de rotation (130).

36. Entretoise à auto-amortissement selon l'une ou plusieurs des revendications précédentes, caractérisée en ce que :
- le corps d'amortissement est constitué par deux corps partiels symétriques (145) présentant respectivement une partie dépassante (160), et
- les deux corps partiels (145) sont introduits des deux côtés dans la réception (175) à l'état de montage final.

37. Entretoise à auto-amortissement selon la revendication 36, caractérisée en ce que le six-pans en relief (155) du corps partiel (145) s'étend de manière conique en direction de l'axe de rotation (130).

38. Entretoise à auto-amortissement selon les revendications 36 et 37, caractérisée en ce que les faces frontales s'appuyant l'une contre l'autre à l'état de montage final des deux six-pans extérieurs (155) présentent le plus petit diamètre de contour du corps d'amortissement (145).

39. Entretoise à auto-amortissement selon l'une ou plusieurs des revendications précédentes, caractérisée en ce que le corps d'amortissement (145) peut être vulcanisé dans la réception (175).

40. Entretoise à auto-amortissement selon l'une ou plusieurs des revendications précédentes, caractérisée en ce que le corps d'amortissement (145) est constitué en un matériau électriquement conducteur.

41. Entretoise à auto-amortissement selon l'une ou plusieurs des revendications précédentes, caractérisée en ce que :
- le corps d'amortissement est constitué en un matériau électriquement non conducteur,
- un ressort de contact (205) est fixé par une extrémité sur le bras de retenue (10) et est relié par son autre extrémité au gousset (15), et
- le ressort de contact (205) met en contact électriquement conducteur le bras de retenue (10) et le gousset (15) et les relie l'un à l'autre pour compensation du potentiel.

42. Entretoise à auto-amortissement selon l'une ou plusieurs des revendications précédentes, caractérisée en ce qu'une saillie radiale (170) pénétrant à l'état de montage final dans les cavités de réception (90) est formée à l'extrémité de fixation (165) du bras de retenue (10) et fait office de butée de limitation de rotation.

43. Entretoise à auto-amortissement selon l'une ou plusieurs des revendications précédentes, caractérisée par plusieurs saillies radiales (170) agencées en répartition à la périphérie de l'extrémité de fixation (165).

44. Entretoise à auto-amortissement selon l'une ou plusieurs des revendications précédentes, caractérisée par une tige de contact (220) sollicitée sous la pression d'un ressort dans une saillie radiale (170), ladite tige de contact (220) s'appuyant par son extrémité de contact (225) contre la surface intérieure (95) de l'extrémité de gousset (25) pour la liaison électriquement conductrice du bras de retenue (10) et du gousset (15).

45. Entretoise à auto-amortissement pour des conducteurs en faisceau, comportant deux conducteurs partiels (35) et un gousset (15) en tant que corps central (5), selon l'une ou plusieurs des revendications précédentes, caractérisée en ce qu'un bras de retenue respectif (10) est fixé aux deux extrémités de gousset (25).

46. Entretoise à auto-amortissement selon l'une ou plusieurs des revendications précédentes, caractérisée en ce que le gousset (15) est un composant en une seule pièce, poinçonné et coudé à partir d'un flan de tôle ou d'une bande aplatie, et en ce qu'il est constitué en un alliage d'aluminium ou en acier.
